(19) Europäisches Patentamt / European Patent Office / Office européen des brevets

(11) **EP 3 219 064 B1**

(12) **EUROPEAN PATENT SPECIFICATION**

(45) Date of publication and mention of the grant of the patent:
**10.10.2018 Bulletin 2018/41**

(21) Application number: **14821561.9**

(22) Date of filing: **15.12.2014**

(51) Int Cl.:
**H04L 27/26** *(2006.01)*

(86) International application number:
**PCT/EP2014/077781**

(87) International publication number:
**WO 2016/095947 (23.06.2016 Gazette 2016/25)**

(54) **IMPROVEMENT OF KARHUNEN-LOEVE ALGORITHM FOR ESTIMATING FREQUENCY OFFSET BY USE OF A BETTER CORRELATION MODEL**

VERBESSERUNG DES KARHUNEN-LOEVE-ALGORITHMUS ZUR KALKULATION DES FREQUENZVERSATZES UNTER VERWENDUNG EINES BESSEREN KORRELATIONSMODELLS

AMÉLIORATION D'UN ALGORITHME DE KARHUNEN-LOEVE POUR ESTIMER UN DÉCALAGE DE FRÉQUENCE PAR UTILISATION D'UN MEILLEUR MODÈLE DE CORRÉLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2017 Bulletin 2017/38**

(73) Proprietor: **Huawei Technologies Co., Ltd.
Longgang District
Shenzhen, Guangdong 518129 (CN)**

(72) Inventor: **RUSEK, Fredrik
S-16440 Kista (SE)**

(74) Representative: **Kreuz, Georg Maria
Huawei Technologies Duesseldorf GmbH
Riesstraße 25
80992 München (DE)**

(56) References cited:
**CN-A- 104 022 992**

**Description**

**TECHNICAL FIELD**

Implementations described herein generally pertain to a receiver and a method in a receiver, and more particularly to a mechanism for estimating frequency offset between transmitter and receiver in a wireless communication system.

**BACKGROUND**

Orthogonal Frequency Division Multiplexing (OFDM) is the chosen modulation technique in contemporary systems such as 3rd Generation Partnership Project (3GPP) Long Term Evolution (LTE) and WIFI. A severe, problem of OFDM is frequency offsets between the transmitter and the receiver. This is referred to as Carrier Frequency Offset (CFO). The effect of a CFO is that orthogonality among the OFDM sub-carriers is lost. In the case that the CFO would be known to the receiver, it may compensate for the CFO by a frequency shift, and orthogonality is assured. Hence, mitigating CFOs is equivalent to the problem of estimating the CFO from the received data.

The CFO may be broken up into two parts, the Integer Frequency Offset (IFO) and the Fractional Frequency Offset (FFO).

$$\varepsilon_{CFO} = \varepsilon_{IFO} + \varepsilon_{FFO}$$

where $\varepsilon_{IFO}$ is an integer multiplied by the sub-carrier spacing and $\varepsilon_{FFO}$ is limited in magnitude to half the sub-carrier spacing. In LTE, the sub-carrier spacing is 15 kHz, so the FFO is limited to 7.5 kHz in magnitude, and the IFO is a multiple of 15 kHz.

During initial synchronisation, the precise value of $\varepsilon_{IFO}$ is obtained. Hence, the remaining task is to estimate the FFO. Throughout this disclosure, it will be assumed that the IFO is already estimated. It is standard notational procedure to normalise all offsets by the sub-carrier spacing, so that the FFO is limited to $\varepsilon_{FFO} \in \left[ -\frac{1}{2}, \frac{1}{2} \right].$

The FFO may be estimated based on the received signals. In this work it may be assumed that two OFDM symbols are at our disposal. A condition for the FFO estimation to work is that these two symbols comprises training symbols, a.k.a., pilot symbols. If so, then based on these two OFDM symbols it may be aimed at proposing a near-optimal FFO estimator algorithm capable of dealing with an arbitrary FFO in the range $\varepsilon_{FFO} \in \left[ -\frac{1}{2}, \frac{1}{2} \right].$

In a legacy solution, the likelihood function of the CFO $\varepsilon$ given the two received signals reads:

$$\lambda(\varepsilon) = - \begin{bmatrix} \mathbf{P}_0^{-1} \mathbf{Q} \mathbf{D}_0^H(\varepsilon) \mathbf{y}_0 \\ \mathbf{P}_t^{-1} \mathbf{Q} \mathbf{D}_t^H(\varepsilon) \mathbf{y}_t \end{bmatrix}^H (\mathbf{\Lambda} + N_0 \mathbf{I}_{2N_{FFT}})^{-1} \begin{bmatrix} \mathbf{P}_0^{-1} \mathbf{Q} \mathbf{D}_0^H(\varepsilon) \mathbf{y}_0 \\ \mathbf{P}_t^{-1} \mathbf{Q} \mathbf{D}_t^H(\varepsilon) \mathbf{y}_t \end{bmatrix}$$

where $\mathbf{P}_k$ is a diagonal matrix with $\mathbf{p}_k$ along its diagonal, and the matrix $\Lambda$ is the covariance matrix of the channel in the frequency domain, i.e.,

$$\mathbf{\Lambda} = E \left[ \begin{bmatrix} diag(\mathbf{H}_0) \\ diag(\mathbf{H}_t) \end{bmatrix} \begin{bmatrix} diag(\mathbf{H}_0) \\ diag(\mathbf{H}_t) \end{bmatrix}^H \right]$$

where $diag(\mathbf{X})$ is a column vector with the its elements taken from the main diagonal of $\mathbf{X}$. As can be seen, all quantities needed to evaluate $\lambda(\varepsilon)$ are well defined except for $\Lambda$. An assumption may be made:

$$\Lambda = \begin{bmatrix} \mathbf{I} & \mathbf{I} \\ \mathbf{I} & \mathbf{I} \end{bmatrix}.$$

This reduces the complexity of evaluating $\lambda(\varepsilon)$, and is also a decent choice when no prior information is present of the channel covariance $\Lambda$. However, unfortunately this assumption may not coincide with reality.

Subsequently in the legacy method, three values of $\lambda(\varepsilon)$, are computed:

$$\mu_{-1} = \lambda(-1/t\Delta)$$

$$\mu_0 = \lambda(0)$$

$$\mu_1 = \lambda(1/t\Delta)$$

Due to the large dimensions of the matrices involved in the formula for $\lambda(\varepsilon)$, these three values are computationally heavy to reach. An important observation is that the three computed values, $\mu_{-1}, \mu_0, \mu_1$, are sufficient in order to evaluate $\lambda(\varepsilon)$ at any other value of $\varepsilon$. That is, the function $\lambda(\varepsilon)$ is three dimensional and when the three values have been computed (with quite some effort), all other values are computationally cheap to obtain. Based on this observation, a low-complexity method to estimate $\varepsilon$ based on $\mu_{-1}, \mu_0, \mu_1$ is then formulated.

In the case that the OFDM channels $\mathbf{H}_0$ and $\mathbf{H}_t$ are correlated according to the simplified correlation model $\Lambda$ used in the legacy method, the legacy method is optimal (in the maximum likelihood sense) and cannot be further improved. However, the correlation model $\Lambda$ is highly unrealistic as it has the following physical meaning:

Firstly, the channel at sub-carrier $k$ is independent of the channel at all other sub-carriers. In reality, the channels at two adjacent sub-carriers are virtually the same, so the assumption made in the legacy correlation model $\Lambda$ is highly unrealistic.

Secondly, the channel at OFDM symbol $t$ is identical to the one at time 0. In reality, due to Doppler effects, the two channels may be strongly correlated, but they are essentially never identical.

Due to this, the legacy method suffers from performance degradations compared with an estimator that would use the true channel correlation.

Thus, there is room for improvement when estimating carrier frequency offset.

EP 2887599 A1 discloses a receiver (120) and a method (500) in a receiver (120), for estimating a normalised frequency offset between a transmitter (110) and the receiver (120) in a wireless communication system (100), based on Orthogonal Frequency Division Multiplexing, OFDM.

## SUMMARY

It is therefore an object to obviate at least some of the above mentioned disadvantages and to improve the performance in a wireless communication system.

This and other objects are achieved by the features of the appended independent claims. Further implementation forms are apparent from the dependent claims, the description and the figures.

According to a first aspect, a receiver as detailed in independent claim 1 is provided.

Thereby, a maximum likelihood estimation, or near- maximum likelihood estimation of the frequency offset is provided, which improves significantly and non-trivially over the currently conventional solutions at an affordable complexity cost. By using the transmitted pilot signals $\mathbf{y}_{r1}$, $\mathbf{y}_{r2}$ that anyway are transmitted by the transmitter for other purposes, an estimation of the FFO may be made without addition of any dedicated signalling, which is an advantage. Thanks to the herein disclosed aspect, fractional frequency offset may be estimated considerably faster and with less computational effort than according to conventional solutions such as the extended baseline algorithm. Thereby, an improved and near optimal algorithm in the sense that it is extremely close to exact maximum likelihood estimation is achieved. Thus an improved performance within a wireless communication system is provided.

In a first possible implementation of the receiver according to the first aspect, wherein the processor is configured to determine correlation model based on any of Extended Pedestrian A (EPA), Extended Vehicular A (EVA), Extended Typical Urban (ETU) correlation models when the correlation among involved sub-carrier channels at the first pilot signal $\mathbf{y}_{r1}$ and the second pilot signal $\mathbf{y}_{r2}$ is known.

By selecting an appropriate correlation model a better adaptation to realistic transmission conditions is made, resulting in an improved estimation of the frequency offset value $\varepsilon$.

In a second possible implementation of the receiver according to the first aspect, or the first possible implementation thereof, the processor may be configured to determine the correlation model by computing $\boldsymbol{Q}\Sigma_0\boldsymbol{Q}^H$, where Q is the IFFT matrix and

$$\boldsymbol{\Sigma}_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix} ,$$

wherein $\Sigma_0$ is a diagonal matrix comprising the eigenvalues of the covariance among the sub-carriers at any given OFDM symbol, $N_{cp}$ is length of a Cyclic Prefix, CP, and $N_{FFT}$ is number of sub-carriers of the received pilot signals $\mathbf{y}_{r1}$, $\mathbf{y}_{r2}$.

Thereby, a further improved adaptation to realistic transmission conditions is made in cases when correlation among said sub-carrier channels is unknown, resulting in an improved estimation of the frequency offset value $\varepsilon$.

In a third possible implementation of the receiver according to the first aspect, or any previous possible implementation thereof, the processor is configured to approximate the maximum value of the log-likelihood function $\lambda(\varepsilon)$ by a Karhunen-Loeve approximation of $\lambda(\varepsilon)$, based on the computed three complex values $\mu_{-1}$, $\mu_0$, and $\mu_1$, where:

$$\mu_{-1} = \lambda_c(-1/t\Delta)$$

$$\mu_0 = \lambda_c(0) \qquad ,$$

$$\mu_1 = \lambda_c(1/t\Delta)$$

where $t$ is the distance between the received pilot signals $\mathbf{y}_{r1}$, $\mathbf{y}_{r2}$, $\Delta = (N_{FFT} + N_{cp})/N_{FFT}$.

By performing the disclosed estimation by the quasi maximum likelihood method, but not a full maximum likelihood algorithm, accurate frequency offset estimation is achieved, without introducing the complex, time consuming and resource demanding efforts that a full maximum likelihood algorithm would require. Thereby, time and computational power are saved.

In a fourth possible implementation of the receiver according to the third possible implementation of the first aspect, the processor is configured to perform the Karhunen-Loeve approximation of $\lambda(\varepsilon)$, wherein the log-likelihood function $\lambda(\varepsilon)$ satisfies: $\lambda(\varepsilon) = Re(\lambda_c(\varepsilon))$.

Thereby an appropriate definition of the log-likelihood function $\lambda(\varepsilon)$ is achieved, leading to a further improved estimation of the normalised frequency offset value $\varepsilon$.

In a fifth possible implementation of the receiver according to the first aspect, or any previous possible implementation thereof, the processor may be configured to perform the Karhunen-Loeve approximation of $\lambda_c(\varepsilon)$, given by

$$\lambda_c(\varepsilon) \approx \alpha_{-1}\exp(-i2\pi\varepsilon(\Delta t - 0.5)) + \alpha_0\exp(-i2\pi\varepsilon(\Delta t)) + \alpha_1\exp(-i2\pi\varepsilon(\Delta t + 0.5)),$$

where the three coefficients are chosen so that

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function is then taken as:

$$\lambda(\varepsilon) \approx \mathrm{Re}(\lambda_c(\varepsilon)) = \mathrm{Re}(\alpha_{-1}\exp(-i2\pi\varepsilon(\Delta t - 0.5) + \alpha_0\exp(-i2\pi\varepsilon(\Delta t) + \alpha_1\exp(-i2\pi\varepsilon(\Delta t + 0.5)).$$

Thanks to the selected Karhunen-Loeve approximation, an appropriate estimation is made without introducing the complex, time consuming and resource demanding efforts that a full maximum likelihood algorithm would require. Thereby, time and computational power are saved.

In a sixth possible implementation of the receiver according to the first aspect, or any previous possible implementation thereof, the processor is configured to perform the Karhunen-Loeve approximation of $\lambda_c(\varepsilon)$, wherein the log-likelihood function $\lambda(\varepsilon)$ is defined as:

$$\lambda(\varepsilon) = -2\,\mathrm{Re}\left\{\tilde{\mathbf{y}}_0(\varepsilon)^H\left[(\mathbf{I}N_0 + \boldsymbol{\Sigma}_0(1-\alpha))^{-1} - (\mathbf{I}N_0 + \boldsymbol{\Sigma}_0(1-\alpha))^{-1}\right]\tilde{\mathbf{y}}_t(\varepsilon)\right\},$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the Inverse Fast Fourier Transform (IFFT) matrix and $\mathbf{Y}_k(\varepsilon)$ is the Fast Fourier Transform (FFT) of signal $k$, compensated for the frequency offset $\varepsilon$.

Thereby an appropriate definition of the log-likelihood function $\lambda(\varepsilon)$ is achieved, leading to an improved estimation of the normalised frequency offset value $\varepsilon$.

In a seventh possible implementation of the receiver according to the first aspect, or any previous possible implementation thereof, the processor is configured to estimate the maximum value of the Karhunen-Loeve approximation of the log-likelihood function $\lambda(\varepsilon)$ by application of an optimisation algorithm comprised in the group: the Newton-Raphson method, the Secant method, the Backtracking line search, the Nelder-Mead method and/or golden section search, or other similar methods.

By using a known, reliable optimisation algorithm to estimate the maximum value of the Karhunen-Loeve approximation of the log-likelihood function $\lambda(\varepsilon)$, a simplified implementation is enabled.

In an eighth possible implementation of the receiver according to the first aspect, or any previous possible implementation thereof, the processor is configured to estimate the maximum value of the Karhunen-Loeve approximation of the log-likelihood function $\lambda(\varepsilon)$ by:

selecting $P$ values $\varepsilon$ such that $\varepsilon \in \{\varepsilon_1, \varepsilon_2, ..., \varepsilon_P\}$ within [-0.5, 0.5];
computing $P$ values of the Karhunen-Loeve approximation of $\lambda(\varepsilon)$ at $\varepsilon \in \{\varepsilon_1, \varepsilon_2, ..., \varepsilon_P\}$;
determining the biggest value of the Karhunen-Loeve approximation of $\lambda(\varepsilon)$, denoted by $\lambda_{max}$, as $\lambda_{max} = \max \lambda(\varepsilon_m)$, $1 \le m \le P$, and corresponding value of $\varepsilon$ denoted $\varepsilon_{max}$; and
utilising the determined biggest value $\lambda_{max}$ and corresponding value $\varepsilon_{max}$ as a starting point in a line search algorithm to find the maximum of the Karhunen-Loeve approximation of $\lambda(\varepsilon)$.

Thereby an improved algorithm for estimating the maximum value of the Karhunen-Loeve approximation of the log-likelihood function $\lambda(\varepsilon)$ is achieved, leading to an improved estimation of the frequency offset value $\varepsilon$.

In a ninth possible implementation of the receiver according to the first aspect, or any previous possible implementation thereof, the processor is configured to, when having determined the biggest value $\lambda_{max}$ and corresponding value $\varepsilon_{max}$, determine that the maximum value of the Karhunen-Loeve approximation of $\lambda(\varepsilon)$ is within an interval:

$$\varepsilon \in \frac{2\varepsilon_{max} - 2 - P}{2P}, \frac{2\varepsilon_{max} - P}{2P}.$$

Thereby a further improvement is made, leading to an improved estimation of the frequency offset value $\varepsilon$.

In a tenth possible implementation of the receiver according to the first aspect, or any previous possible implementation thereof, the processor is further configured to find the maximum value of the Karhunen-Loeve approximation of $\lambda(\varepsilon)$ within the determined interval with $M$ iterations, using an optimisation algorithm comprised in the group: the Newton-Raphson method, the Secant method, the Backtracking line search, the Nelder-Mead method and/ or golden section search, or other similar methods.

By using a known, reliable optimisation algorithm to estimate the maximum value of the Karhunen-Loeve approximation of the log-likelihood function $\lambda(\varepsilon)$ within the determined interval with $M$ iterations, a simplified implementation is enabled.

In an eleventh possible implementation of the receiver according to the first aspect, or any previous possible implementation thereof, the receiver is represented by a User Equipment (UE) and the transmitter is represented by a radio network node.

In a twelfth possible implementation of the receiver according to the first aspect, or any previous possible implementation thereof, the receiver is represented by a radio network node and the transmitter is represented by a UE.

According to a second aspect, a method in a receiver as detailed in independent claim 13 is provided.

Thereby, a maximum likelihood estimation, or near- maximum likelihood estimation of the frequency offset is provided, which improves significantly and non-trivially over the currently conventional solutions at an affordable complexity cost. By using the transmitted pilot signals $\mathbf{y}_{r1}$, $\mathbf{y}_{r2}$ that anyway are transmitted by the transmitter 110 for other purposes, an estimation of the FFO may be made without addition of any dedicated of signalling, which is an advantage. Thanks to the herein disclosed aspect, fractional frequency offset may be estimated considerably faster and with less computational effort than according to conventional solutions such as the extended baseline algorithm. Thereby, an improved and near optimal algorithm in the sense that it is extremely close to exact maximum likelihood estimation is achieved. Thus an improved performance within a wireless communication system is provided.

In a first possible implementation of the method according to the second aspect, the determined correlation model comprises any of EPA, EVA, ETU correlation models when the correlation among involved sub-carrier channels at the first pilot signal $\mathbf{y}_{r1}$ and the second pilot signal $\mathbf{y}_{r2}$ is known.

By selecting an appropriate correlation model a better adaptation to realistic transmission conditions is made, resulting in an improved estimation of the frequency offset value $\varepsilon$.

In a second possible implementation of the method according to the second aspect, or the first possible implementation thereof, the determined correlation model may be computed as $\mathbf{Q}\Sigma_0\mathbf{Q}^H$, where Q is the IFFT matrix and

$$\Sigma_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix},$$

wherein $\Sigma_0$ is a diagonal matrix comprising the eigenvalues of the covariance among the sub-carriers at any given OFDM symbol, $N_{cp}$ is length of a CP and $N_{FFT}$ is number of sub-carriers of the received pilot signals $\mathbf{y}_{r1}$, $\mathbf{y}_{r2}$.

Thereby, a further improved adaptation to realistic transmission conditions is made in cases when correlation among said sub-carrier channels is unknown, resulting in an improved estimation of the frequency offset value $\varepsilon$.

In a third possible implementation of the method according to the second aspect, or any possible implementation thereof, the maximum value of the log-likelihood function $\lambda(\varepsilon)$ is approximated by a Karhunen-Loeve approximation of $\lambda(\varepsilon)$, based on the computed three complex values $\mu_{-1}$, $\mu_0$, and $\mu_1$, where:

$$\mu_{-1} = \lambda_c(-1/t\Delta)$$

$$\mu_0 = \lambda_c(0) \qquad ,$$

$$\mu_1 = \lambda_c(1/t\Delta)$$

where $t$ is the distance between the received pilot signals $\mathbf{y}_{r1}$, $\mathbf{y}_{r2}$, $\Delta = (N_{FFT} + N_{cp})/N_{FFT}$, and the likelihood function satisfies $\lambda(\varepsilon) = Re(\lambda_c(\varepsilon))$.

By performing the disclosed estimation by the quasi maximum likelihood method, but not a full maximum likelihood algorithm, accurate frequency offset estimation is achieved, without introducing the complex, time consuming and resource demanding efforts that a full maximum likelihood algorithm would require. Thereby, time and computational power are saved.

In a fourth possible implementation of the method according to the third possible implementation of the second aspect, the log-likelihood function $\lambda(\varepsilon)$ satisfies: $\lambda(\varepsilon) = Re(\lambda_c(\varepsilon))$.

Thereby an appropriate definition of the log-likelihood function $\lambda(\varepsilon)$ is achieved, leading to a further improved estimation of the normalised frequency offset value $\varepsilon$.

In a fifth possible implementation of the method according to the second aspect, or any previous possible implementation thereof, the Karhunen-Loeve approximation of $\lambda_c(\varepsilon)$ is given by

$$\lambda_c(\varepsilon) \approx \alpha_{-1}\exp(-i2\pi\varepsilon(\Delta t - 0.5)) + \alpha_0\exp(-i2\pi\varepsilon(\Delta t)) + \alpha_1\exp(-i2\pi\varepsilon(\Delta t + 0.5)),$$

where the three coefficients are chosen so that

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function is then taken as:

$$\lambda(\varepsilon) \approx \mathrm{Re}(\lambda_c(\varepsilon)) = \mathrm{Re}(\alpha_{-1}\exp(-i2\pi\varepsilon(\Delta t - 0.5)) + \alpha_0\exp(-i2\pi\varepsilon(\Delta t)) + \alpha_1\exp(-i2\pi\varepsilon(\Delta t + 0.5))).$$

Thanks to the selected Karhunen-Loeve approximation, an appropriate estimation is made without introducing the complex, time consuming and resource demanding efforts that a full maximum likelihood algorithm would require. Thereby, time and computational power are saved.

In a sixth possible implementation of the method according to the second aspect, or any previous possible implementation thereof, the log-likelihood function $\lambda(\varepsilon)$ is defined as:

$$\lambda(\varepsilon) = -2\,\mathrm{Re}\left\{\tilde{\mathbf{y}}_0(\varepsilon)^H\left[(\mathbf{I}N_0 + \mathbf{\Sigma}_0(1-\alpha))^{-1} - (\mathbf{I}N_0 + \mathbf{\Sigma}_0(1-\alpha))^{-1}\right]\tilde{\mathbf{y}}_t(\varepsilon)\right\},$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the IFFT matrix and $\mathbf{Y}_k(\varepsilon)$ is the FFT of signal $k$, compensated for the frequency offset $\varepsilon$.

Thereby an appropriate definition of the log-likelihood function $\lambda(\varepsilon)$ is achieved, leading to an improved estimation of the normalised frequency offset value $\varepsilon$.

In a seventh possible implementation of the method according to the second aspect, or any previous possible implementation thereof, the method further comprises estimating the maximum value of the Karhunen-Loeve approximation of the log-likelihood function $\lambda(\varepsilon)$ by application of an optimisation algorithm comprised in the group: the Newton-Raphson method, the Secant method, the Backtracking line search, the Nelder-Mead method and/or golden section search, or other similar methods.

By using a known, reliable optimisation algorithm to estimate the maximum value of the Karhunen-Loeve approximation of the log-likelihood function $\lambda(\varepsilon)$, a simplified implementation is enabled.

In an eighth possible implementation of the method according to the second aspect, or any previous possible implementation thereof, the method may comprise estimating the maximum value of the Karhunen-Loeve approximation of the log-likelihood function $\lambda(\varepsilon)$ by:

selecting $P$ values $\varepsilon$ such that $\varepsilon \in \{\varepsilon_1, \varepsilon_2, ..., \varepsilon_P\}$ within [-0.5, 0.5];
computing $P$ values of the Karhunen-Loeve approximation of $\lambda(\varepsilon)$ at $\varepsilon \in \{\varepsilon_1, \varepsilon_2, ..., \varepsilon_P\}$;
determining the biggest value of the Karhunen-Loeve approximation of $\lambda(\varepsilon)$, denoted by $\lambda_{max}$, as $\lambda_{max} = \max \lambda(\varepsilon_m)$, $1 \le m \le P$, and corresponding value of $\varepsilon$ denoted $\varepsilon_{max}$; and
utilising the determined biggest value $\lambda_{max}$ and corresponding value $\varepsilon_{max}$ as a starting point in a line search algorithm to find the maximum of the Karhunen-Loeve approximation of $\lambda(\varepsilon)$.

Thereby an improved algorithm for estimating the maximum value of the Karhunen-Loeve approximation of the log-likelihood function λ(ε) is achieved, leading to an improved estimation of the frequency offset value ε.

In a ninth possible implementation of the method according to the second aspect, or any previous possible implementation thereof, the method further comprises, when having determined the biggest value $\lambda_{max}$ and corresponding value $\varepsilon_{max}$, determine that the maximum value of the Karhunen-Loeve approximation of λ(ε) is within an interval:

$$\varepsilon \in \left( \frac{2\varepsilon_{max}-2-P}{2P} , \frac{2\varepsilon_{max}-P}{2P} \right).$$

Thereby a further improvement is made, leading to an improved estimation of the frequency offset value ε.

In a tenth possible implementation of the method according to the second aspect, or any previous possible implementation thereof, the method further comprises finding the maximum value of the Karhunen-Loeve approximation of λ(ε) within the determined interval with *M* iterations, using an optimisation algorithm comprised in the group: the Newton-Raphson method, the Secant method, the Backtracking line search, the Nelder-Mead method and/ or golden section search, or other similar methods.

By using a known, reliable optimisation algorithm to estimate the maximum value of the Karhunen-Loeve approximation of the log-likelihood function λ(ε) within the determined interval with M iterations, a simplified implementation is enabled.

According to a third aspect, a computer program comprising program code for performing a method according to the second aspect, when the computer program is performed on a processor.

Thereby, a maximum likelihood estimation, or near- maximum likelihood estimation of the frequency offset is provided, which improves significantly and non-trivially over the currently conventional solutions at an affordable complexity cost. By using the transmitted pilot signals $\mathbf{y}_{r1}$, $\mathbf{y}_{r2}$ that anyway are transmitted by the transmitter 110 for other purposes, an estimation of the FFO may be made without addition of any dedicated of signalling, which is an advantage. Thanks to the herein disclosed aspect, fractional frequency offset may be estimated considerably faster and with less computational effort than according to conventional solutions such as the extended baseline algorithm. Thereby, an improved and near optimal algorithm in the sense that it is extremely close to exact maximum likelihood estimation is achieved. Thus an improved performance within a wireless communication system is provided.

Other objects, advantages and novel features of the aspects of the disclosed solutions will become apparent from the following detailed description.

**BRIEF DESCRIPTION OF THE DRAWINGS**

Various embodiments will be more readily understood by reference to the following description, taken with the accompanying drawings, in which:

**Figure 1A** is an illustration of system architecture comprising a transmitter and a receiver, according to an embodiment.
**Figure 1B** is an illustration of system architecture comprising a transmitter and a receiver, according to an embodiment.
**Figure 2** is a flow chart illustrating a method according to some embodiments.
**Figure 3** is a diagram illustrating a comparison between a method according to some embodiments and prior art.
**Figure 4** is a flow chart illustrating a method according to some embodiments.
**Figure 5** is a block diagram illustrating a receiver according to an embodiment.

**DETAILED DESCRIPTION**

Embodiments described herein are defined as a receiver and a method in a receiver, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

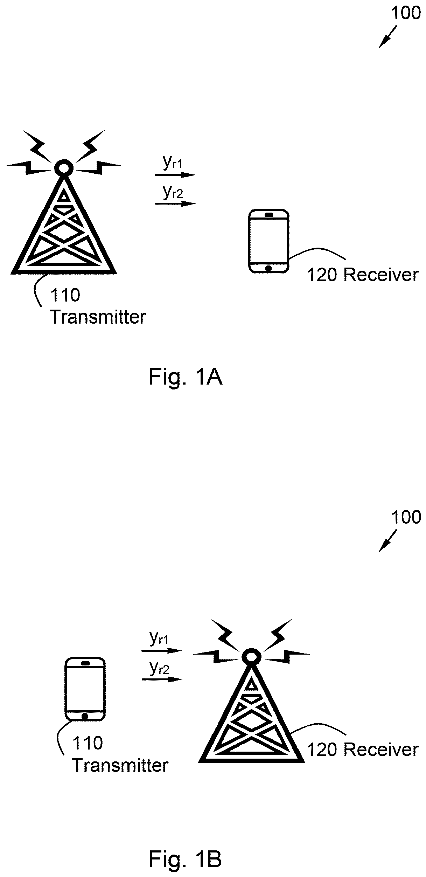

**Figure 1A** is a schematic illustration over a wireless communication system **100** comprising a transmitter **110** communicating with a receiver **120.** In the illustrated example, a first pilot signal $\mathbf{y}_{r1}$ and a second pilot signal $\mathbf{y}_{r2}$ are

transmitted by the transmitter 110 to be received by the receiver 120. The first pilot signal $\mathbf{y}_{r1}$ may be received at the time r1 and the second pilot signal $\mathbf{y}_{r2}$ may be received at the time r2.

The wireless communication system 100 may at least partly be based on any arbitrary OFDM based access technology such as e.g. 3GPP Long Term Evolution (LTE), LTE-Advanced, LTE fourth generation mobile broadband standard, Evolved Universal Terrestrial Radio Access Network (E-UTRAN), Worldwide Interoperability for Microwave Access (WiMax), WiFi, just to mention some few options.

The wireless communication system 100 may be configured to operate according to the Time-Division Duplex (TDD), or Frequency Division Duplexing (FDD) principles for multiplexing, according to different embodiments.

In the illustrated wireless communication system 100 the transmitter 110 is comprised in a radio network node and the receiver 120 is comprised in a User Equipment (UE), wherein the radio network node may be serving one or more cells.

The purpose of the illustration in Figure 1A is to provide a simplified, general overview of the methods and nodes, such as the transmitter 110 and receiver 120 herein described, and the functionalities involved. The methods, transmitter 110 and receiver 120 will subsequently, as a non-limiting example, be described in a 3GPP/ LTE environment, but the embodiments of the disclosed methods, transmitter 110 and receiver 120 may operate in a wireless communication system 100 based on another access technology such as e.g. any of the above enumerated. Thus, although the embodiments of the method are described based on, and using the lingo of, 3GPP LTE systems, it is by no means limited to 3GPP LTE.

The transmitter 110 may according to some embodiments be referred to as e.g. a radio network node, a base station, a NodeB, an evolved Node Bs (eNB, or eNode B), a base transceiver station, an Access Point Base Station, a base station router, a Radio Base Stations (RBS), a macro base station, a micro base station, a pico base station, a femto base station, a Home eNodeB, a sensor, a beacon device, a relay node, a repeater or any other network node configured for communication with the receiver 120 over a wireless interface, depending e.g. of the radio access technology and terminology used.

The receiver 120 may correspondingly, in some embodiments, be represented by e.g. a UE, a wireless communication terminal, a mobile cellular phone, a Personal Digital Assistant (PDA), a wireless platform, a mobile station, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the transmitter 110, according to different embodiments and different vocabulary used.

However, in other alternative embodiments, as illustrated in **Figure 1B,** the situation may be reversed. Thus the receiver 120 in some embodiments may be represented by e.g. a radio network node, a base station, a NodeB, an eNB, or eNode B, a base transceiver station, an Access Point Base Station, a base station router, a RBS, a macro base station, a micro base station, a pico base station, a femto base station, a Home eNodeB, a sensor, a beacon device, a relay node, a repeater or any other network node configured for communication with the transmitter 110 over a wireless interface, depending e.g. of the radio access technology and terminology used.

Thereby, also in some such alternative embodiments the transmitter 110 may be represented by e.g. a UE, a wireless communication terminal, a mobile cellular phone, a PDA, a wireless platform, a mobile station, a portable communication device, a laptop, a computer, a wireless terminal acting as a relay, a relay node, a mobile relay, a CPE, a Fixed Wireless Access FWA nodes or any other kind of device configured to communicate wirelessly with the receiver 120, according to different embodiments and different vocabulary used.

The transmitter 110 is configured to transmit radio signals comprising information to be received by the receiver 120. Correspondingly, the receiver 120 is configured to receive radio signals comprising information transmitted by the transmitter 110.

The illustrated network setting of one receiver 120 and one transmitter 110 in Figure 1A and Figure 1B respectively, are to be regarded as non-limiting examples of different embodiments only. The wireless communication system 100 may comprise any other number and/ or combination of transmitters 110 and/ or receiver/s 120, although only one instance of a receiver 120 and a transmitter 110, respectively, are illustrated in Figure 1A and Figure 1B, for clarity reasons. A plurality of receivers 120 and transmitters 110 may further be involved in some embodiments.

Thus whenever "one" or "a/an" receiver 120 and/ or transmitter 110 is referred to in the present context, a plurality of receivers 120 and/ or transmitter 110 may be involved, according to some embodiments.

A system model will subsequently be described. Let $\mathbf{s}_{r1}$ and $\mathbf{s}_{r2}$ denote the received OFDM symbols at time r1 and r2, respectively. Further, it may be assumed that time synchronisation and IFO compensation have been carried out so that the Cyclic Prefix (CP) has been removed from the two symbols and the CFO is at most 0.5 in magnitude (i.e., only the FFO remains). Let $\tilde{\mathbf{s}}_{r1}$ and $\tilde{\mathbf{s}}_{r2}$ denote the two signals in the case of no FFO at all. Then: $\mathbf{s}_k = \mathbf{D}_k(\varepsilon_{FFO})\tilde{\mathbf{s}}_k$, $k \in \{r1, r2\}$, where $\mathbf{D}_k(\varepsilon_{FFO})$ is the diagonal matrix:

$$\mathbf{D}_k(\varepsilon_{FFO}) = \operatorname{diag}\left\{\exp\left(2\pi i\,\varepsilon_{FFO}\left[\frac{n-1}{N_{FFT}} + k\Delta\right]\right)\right\}_{n=1}^{N_{FFT}}$$

Where $N_{FFT}$ is the FFT-size and $\Delta$ is the separation of the two symbols $\mathbf{s}_{r1}$ and $\mathbf{s}_{r2}$ measured in units of one OFDM symbol length including the Cyclic Prefix (CP).

Example: when the Cyclic Prefix is $N_{CP}$ samples long, then:

$$\Delta = (r2 - r1)(N_{FFT} + N_{CP})\,/\,N_{FFT}.$$

Due to the CP, we get that $\Delta$>t. The observed signals by the receiver reads $\mathbf{y}_0$, $\mathbf{y}_t$ where $\mathbf{y}_k = \mathbf{s}_k + \mathbf{n}_k$ and $\mathbf{n}_k$ is zero mean proper complex Gaussian noise with covariance matrix $N_0\mathbf{I}$.

Let $\mathbf{Q}$ denote the Discrete Fourier Transform (DFT) matrix of size $N_{FFT}$. Thus $\mathbf{Q}\mathbf{D}_k^H(\varepsilon_{FFO})\mathbf{s}_k = \mathbf{H}_k\mathbf{x}_k$, where $\mathbf{H}_k$ is a diagonal matrix comprising the frequency response of the channel along its main diagonal and $\mathbf{x}_k$ is a column vector with the transmitted frequency symbols. The vector $\mathbf{x}_k$ comprises both training symbols and payload data. Let $\Upsilon_k$ denote the set of positions of $\mathbf{x}_k$ that are allocated to training symbols. Also, $\mathbf{x}_k = \mathbf{p}_k + \mathbf{d}_k$ where $\mathbf{p}_k$ is the vector of training symbols satisfying $p_k[l] = 0$, $l \notin \Upsilon_k$, i.e., there is no training symbols at the data positions, and $\mathbf{d}_k$ are the data symbols satisfying $d_k[l] = 0$, $l \in \Upsilon_k$, i.e., there is no data at the training positions. It may be assumed that the pilot positions are not dependent on the OFDM symbol index, hence $\Upsilon_r = \Upsilon_t = \Upsilon$.

The problem of FFO estimation is well known and has a long and rich history. There are two main branches for FFO estimation: (1) time-domain approaches and (2) frequency domain approaches.

In the time-domain approach, the redundancy added in the Cyclic Prefix, is utilised. Several disadvantages are however associated with this approach such as e.g. that the estimators suffers from problems with DC offsets, spurs and narrow band interferences.

When describing a periodic function in the frequency domain, DC offset, or the DC bias/ DC component/ DC coefficient as it also may be referred to, is the mean value of the waveform. If the mean amplitude is zero, there is no DC offset.

Within the frequency domain approaches, the baseline method is to make the approximation:

$$\mathbf{z}_k = \mathbf{Q}\mathbf{s}_k \approx \exp(i2\pi\varepsilon_{FFO}\Delta)\mathbf{H}_k\mathbf{x}_k$$

that is, after the FFT, the FFO shows up multiplicatively at each sub-carrier.

Thermal noise on the observations has here been omitted. At the positions specified in the pilot position set $\Upsilon$, the symbols in $\mathbf{x}_k$ are known. Thereby, the FFO may be estimated as:

$$\hat{\varepsilon}_{FFO} = \frac{1}{2\pi\Delta}\arg\left\{\sum_{l\in\Upsilon}\frac{z_{r1}^H[l]}{p_{r1}^H[l]}\frac{z_{r2}[l]}{p_{r2}[l]}\right\}.$$

The baseline frequency based estimator however suffers from two main problems: (i) The approximation $\mathbf{z}_k = \mathbf{Q}\mathbf{s}_k \approx \exp(i2\pi\varepsilon_{FFO}\Delta)\mathbf{H}_k\mathbf{x}_k$ is only an approximation, and introduces additional noise into the system. It is not optimal in any sense, although complexity wise attractive.

The second (ii) problem is that it is limited to a maximal FFO of $\frac{1}{2}_\Delta$. In LTE, a typical value for $\Delta$ may be approximately e.g. 3.21, which results from using OFDM symbol 4 and 7 within each sub-frame and using the normal CP. This means that the maximal FFO possible to detect is only $|\varepsilon_{FFO}| < \varepsilon_{max} = \frac{1}{2}_\Delta = 0.1667 \approx 2.33 kHz$. This is far less than half the sub-carrier spacing of 7.5 kHz. As a remedy to the second problem, an extension of the base-line in order to extend the maximal FFO to 0.5 - corresponding to 7.5 kHz in LTE may be made according to some conventional solutions. However, such solution comprises the use of more than two OFDM symbols in the FFO estimation. Further, the problem (i) is not dealt with and will ultimately limit the performance.

Yet another method to deal with the second (ii) problem is to use three identical copies of the baseline method in order to cover three times as large FFO interval. The first copy is shifted in frequency into 4.66 kHz, and the third copy is shifted to 4.66 kHz. The second copy is not shifted and is the normal baseline method. After the frequency shifts, an evaluation may be made:

$$\hat{\varepsilon}_{FFO} = \frac{1}{2\pi\Delta} \arg\left\{ \sum_{l\in\Upsilon} \frac{z_{r1}^H[l]}{p_{r1}^H[l]} \frac{z_{r2}[l]}{p_{r2}[l]} \right\}$$

three times, once for each frequency shift. Then the final output is the estimate with maximal value of:

$$\sum_{l\in\Upsilon} \frac{z_{r1}^H[l]}{p_{r1}^H[l]} \frac{z_{r2}[l]}{p_{r2}[l]}.$$

This algorithm may be referred to as "extended baseline". However, this algorithm performs poorly, as it does not adequately address the problem (i).

According to some embodiments, the objective of the method is to perform a Maximum Likelihood (ML) estimation of the FFO, that is:

$$\hat{\varepsilon}_{FFO} = \arg\max_{\phi} \Pr\left(\mathbf{y}_{r1}, \mathbf{y}_{r2}; \phi\right),$$

where $\Pr(\mathbf{y}_{r1}, \mathbf{y}_{r2}; \phi)$ is the likelihood function for the FFO given the two observed signals $\mathbf{y}_{r1}, \mathbf{y}_{r2}$ where $\mathbf{y}_k = \mathbf{s}_k + \mathbf{n}_k$ and $\mathbf{n}_k$ is zero mean proper complex Gaussian noise with covariance matrix $N_0\mathbf{I}$. Further, a target may be to deal with an FFO that is uniformly distributed in the interval [-0.5, 0.5]. Note that as ML estimation is targeted, it is not possible to improve over the herein disclosed method.

The ML estimator may in some embodiments be conceptually uncomplicated to implement. The bottleneck is that the complexity of a straightforward implementation is prohibitive. As quasi-ML algorithm may be utilised as a remedy, wherein the result is virtually indistinguishable from full ML while at the same time having low computational cost.

The complexity of the proposed method may in some embodiments be essentially three times the baseline method plus a small overhead.

The key observation behind the provided method is that a Karhunen-Loeve approximation, up to any finite order of a log-likelihood function $\lambda(\phi)=\log\Pr(\mathbf{y}_{r1}, \mathbf{y}_{r2}; \phi)$, wherein, from now and onwards, it is omitted to explicitly denote the dependency of $\mathbf{y}_{r1}, \mathbf{y}_{r2}$ on $\lambda(\phi)$, is for all practical purposes three dimensional. This means that when the log-likelihood function $\lambda(\phi)$ is evaluated at three positions, complete information may be obtained about the entire function $\lambda(\phi)$. To compute those three values, may involve approximately three times the complexity of the baseline method. Then a search over $\lambda(\phi)$ may follow, and this search is of less complexity than the baseline method itself.

With the notation introduced earlier, the log-likelihood of the frequency offset hypothesis $\varepsilon_{FFO} = \phi$ given the received signals $\mathbf{y}_{r1}, \mathbf{y}_{r2}$ is

$$\lambda(\phi) \propto -\begin{bmatrix} \mathbf{P}_{r1}^{-1}\mathbf{Q}\mathbf{D}_{r1}^H(\phi)\mathbf{y}_{r1} \\ \mathbf{P}_{r2}^{-1}\mathbf{Q}\mathbf{D}_{r2}^H(\phi)\mathbf{y}_{r2} \end{bmatrix}^H (\mathbf{\Lambda} + N_0 \mathbf{I}_{2N_{FFT}})^{-1} \begin{bmatrix} \mathbf{P}_{r1}^{-1}\mathbf{Q}\mathbf{D}_{r1}^H(\phi)\mathbf{y}_{r1} \\ \mathbf{P}_{r2}^{-1}\mathbf{Q}\mathbf{D}_{r2}^H(\phi)\mathbf{y}_{r2} \end{bmatrix},$$

where $\mathbf{P}_k$ is a diagonal matrix with $\mathbf{p}_k$ along its diagonal, and the matrix $\Lambda$ is the covariance matrix of the channel in the frequency domain, i.e.,

$$\Lambda = E\left[ \begin{bmatrix} diag(\mathbf{H}_{r1}) \\ diag(\mathbf{H}_{r2}) \end{bmatrix} \begin{bmatrix} diag(\mathbf{H}_{r1}) \\ diag(\mathbf{H}_{r2}) \end{bmatrix}^H \right]$$

where $diag(\mathbf{X})$ is a column vector with elements taken from the main diagonal of $\mathbf{X}$. Thus the correlation model can be written as:

$$\mathbf{\Lambda} = E\left\{\begin{bmatrix} \mathbf{H}_0^H \\ \mathbf{H}_t^H \end{bmatrix}\begin{bmatrix} \mathbf{H}_0 & \mathbf{H}_t \end{bmatrix}\right\} = \begin{bmatrix} \mathbf{\Lambda}_{00} & \mathbf{\Lambda}_{0t} \\ \mathbf{\Lambda}_{t0} & \mathbf{\Lambda}_{tt} \end{bmatrix}$$

In LTE test cases, the correlation model is separable, which means that $\Lambda$ may be written in the form:

$$\mathbf{\Lambda} = \begin{bmatrix} \mathbf{\Lambda}_0 & \alpha\mathbf{\Lambda}_0 \\ \alpha\mathbf{\Lambda}_0 & \mathbf{\Lambda}_0 \end{bmatrix}$$

In this correlation model, $\Lambda_0$ represents the covariance among the sub-carriers at any given OFDM symbol, while $\alpha$ represents the correlation between two OFDM symbols in time. Due to the Doppler effect, $\alpha<1$ in general, as $\alpha$ is reversely proportional to the Doppler effect. During channel estimation stages, the matrix $\Lambda_0$ may be classified as one out of the Extended Pedestrian A (EPA), Extended Vehicular A (EVA), and Extended Typical Urban (ETU) correlation models, and an estimate of $\alpha$ may also be at hand. With that, it remains to compute the values:

$$\mu_{-1} = \lambda_c(-1/t\Delta)$$

$$\mu_0 = \lambda(0)$$

$$\mu_1 = \lambda_c(1/t\Delta)$$

where $\lambda(\varepsilon) = Re(\lambda_c(\varepsilon))$ Further, the likelihood $\lambda_c(\varepsilon)$ may be computed at any given value of $\varepsilon$. Define

$$\mathbf{F} = \frac{1}{\sqrt{2}}\begin{bmatrix} \mathbf{Q} & -\mathbf{Q} \\ -\mathbf{Q} & -\mathbf{Q} \end{bmatrix}$$

The covariance matrix $\Lambda + N_0\mathbf{I}_{2N_{FFT}}$ may then be factorised as:

$$\mathbf{\Lambda} + N_0\mathbf{I}_{2N_{FFT}} = \mathbf{F}^H\mathbf{\Sigma}\mathbf{F}$$

where

$$\mathbf{\Sigma} = \begin{bmatrix} \mathbf{I}N_0 + \mathbf{\Sigma}_0(1+\alpha) & 0 \\ 0 & \mathbf{I}N_0 + \mathbf{\Sigma}_0(1-\alpha) \end{bmatrix}$$

$\Sigma_0$ being a diagonal matrix containing the eigenvalues of $\Lambda_0$ along its diagonal. Further, define $\mathbf{Y}_k(\varepsilon) = \mathbf{P}_k^{-1}\mathbf{Q}^H\mathbf{D}_k^H\mathbf{y}_k$. The likelihood function may then be written:

$$\lambda(\varepsilon) = -\begin{bmatrix} \mathbf{Y}_0(\varepsilon) \\ \mathbf{Y}_t(\varepsilon) \end{bmatrix}^H \mathbf{F}^H\mathbf{\Sigma}^{-1}\mathbf{F}\begin{bmatrix} \mathbf{Y}_0(\varepsilon) \\ \mathbf{Y}_t(\varepsilon) \end{bmatrix},$$

where $\lambda(\varepsilon) = Re(\lambda_c(\varepsilon))$. Now define $\tilde{\mathbf{y}}_k(\varepsilon) = \mathbf{Q}\mathbf{Y}_k(\varepsilon)$. The final expression for a simplified likelihood function may then be written as:

$$\lambda_c(\varepsilon) = -2\,\mathrm{Re}\left\{\tilde{\mathbf{y}}_0(\varepsilon)^H\left[(\mathbf{I}N_0 + \Sigma_0(1-\alpha))^{-1} - (\mathbf{I}N_0 + \Sigma_0(1-\alpha))^{-1}\right]\tilde{\mathbf{y}}_t(\varepsilon)\right\} \qquad (1)$$

It may be noted that the full matrix $\Lambda_0$ may not be needed, since equation (1) only utilises its eigenvalues $\Sigma_0$.

A comparison may be made with the corresponding simplified correlation model formula utilised in the legacy method: $\Lambda = \begin{bmatrix} \mathbf{I} & \mathbf{I} \\ \mathbf{I} & \mathbf{I} \end{bmatrix}$. In that case, one reaches the formula for the likelihood function becomes:

$$\lambda(\varepsilon) = -2\,\mathrm{Re}\left\{\mathbf{Y}_0(\varepsilon)^H\,\mathbf{Y}_t(\varepsilon)\right\} \qquad (2)$$

From a complexity point of view there are three times as many terms in Equation (1) compared with Equation (2). Therefore complexity becomes three times as high. Further, one additional Fast Forward Transform (FFT) operation must be carried out for every received symbol. The reason is that in Equation (1), the signal $\tilde{\mathbf{y}}_k(\varepsilon) = \mathbf{Q}\mathbf{Y}_k(\varepsilon)$ is used, while in Equation (2) the signal $\mathbf{Y}_k(\varepsilon)$ may be used directly. This adds to the computational load.

In cases where the correlation $\Lambda_0$ is not known, one can resort to a worst case assumption given the length of the Cyclic Prefix (CP). In LTE, the CP length may always be known. The worst correlation type for a given length of the CP corresponds to:

$$\Sigma_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix} \qquad (3)$$

The number of non-zero diagonal elements equals the CP-length $N_{CP}$. This choice is corresponds to the assumption that the power-delay-profile of the channel is uniform over its delay spread which is less than, or equal to, the CP-length. Since it reflects the delay spread of the channel, it is superior to the choice made in legacy methods.

A full Maximum Likelihood estimator may then compute the value $\lambda(\varepsilon)$ for all possible $\varepsilon$, quantised to the desired accuracy, and then select as output the $\varepsilon$ that maximises $\lambda(\varepsilon)$. This is, however, of impractical complexity, why a more economical method may be pursued.

The function $\lambda(\varepsilon)$ is a random function, and it therefore possesses a Karhunen-Loeve basis expansion as: $\lambda_c(\varepsilon) = \sum_k \alpha_k \vartheta_k(\varepsilon)$, where $\vartheta_k(\varepsilon)$ are eigenfunctions of the kernel:

$$K(\varepsilon_1, \varepsilon_2) = E[\lambda_c(\varepsilon_1)\,\lambda_c(\varepsilon_2)]$$

The key observation is now that most eigenvalues of $K(\varepsilon_1, \varepsilon_2)$ are very small. In fact, only three of the eigenvalues comprises around 99.9% of the total mass of the kernel. More precisely, let $\beta_k$ denote the eigenvalues of $K(\varepsilon_1, \varepsilon_2)$ corresponding to the eigenfunctions $\vartheta_k(\varepsilon)$, and sort the eigenvalues in descending order. Then, for all LTE settings, it is observed that:

$$\beta_1 + \beta_2 + \beta_3 > 0.999\sum_k \beta_k.$$

The implication of this observation is that the log-likelihood function $\lambda(\varepsilon)$ is, for all practical purposes, three dimensional, i.e.,

$$\lambda(\varepsilon) = \sum_{k} \alpha_k \vartheta_k(\varepsilon) \cong \lambda_3(\varepsilon) \sum_{k=1}^{3} \alpha_k \vartheta_k(\varepsilon)$$

Finding a closed form for the eigenfunctions $\vartheta_k(\varepsilon)$ may be difficult as they change for the different LTE settings. For that reason, another set of functions has to be found that covers as much mass as possible of the kernel. Such set of three basis functions has not been found; however, by ignoring to take the real-value of the likelihood function, the calculations may be reduced to:

$$\lambda_c(\varepsilon) \approx \alpha_{-1} \exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5))$$

where the three coefficients are chosen so that

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function is then taken as:

$$\lambda(\varepsilon) \approx \mathrm{Re}(\lambda_c(\varepsilon)) = \mathrm{Re}(\alpha_{-1} \exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5))).$$

Further, the log-likelihood function $\lambda(\varepsilon)$ is defined as:

$$\lambda(\varepsilon) = -2\,\mathrm{Re}\left\{\tilde{\mathbf{y}}_0(\varepsilon)^H \left[(\mathbf{I}N_0 + \mathbf{\Sigma}_0(1-\alpha))^{-1} - (\mathbf{I}N_0 + \mathbf{\Sigma}_0(1-\alpha))^{-1}\right]\tilde{\mathbf{y}}_i(\varepsilon)\right\}$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the Inverse Fast Fourier Transform, IFFT, matrix and $\mathbf{Y}_k(\varepsilon)$ is the Fast Fourier Transform, FFT, of signal $k$, compensated for the frequency offset $\varepsilon$.

At this point, an approximation $\lambda_3(\varepsilon)$ to the log-likelihood $\lambda(\varepsilon)$ has been established, namely:

$$\lambda(\varepsilon) \cong \lambda_3(\varepsilon) = Re\{\lambda_3^c(\varepsilon)\} = Re\left\{\sum_{k=1}^{3} \alpha_k \varphi_k(\varepsilon)\right\}. \quad {}_{\lambda(\varepsilon)}$$

This is a remarkable result, as the complexity of computing one value of the log-likelihood thereby becomes very low as only three multiplications may be required, which saves computing resources and time.

Next step is to estimate the FFO. On the most fundamental level, any optimisation algorithm that can find the maximum of an arbitrary function f(x) may be applied. However, in some embodiments, the following algorithm may be used:

1. Select $P$ values $\varepsilon$ such that $\varepsilon \in \{\varepsilon_1, \varepsilon_2, ..., \varepsilon_P\}$ within [-0.5, 0.5].
2. Compute $P$ values of the Karhunen-Loeve approximation of $\lambda(\varepsilon)$ at $\varepsilon \in \{\varepsilon_1, \varepsilon_2, ..., \varepsilon_P\}$.
3. Determining the biggest value of the Karhunen-Loeve approximation of $\lambda(\varepsilon)$, denoted by $\lambda_{max}$, as $\lambda_{max} = \max \lambda(\varepsilon_m)$, $1 \leq m \leq P$, and corresponding value of $\varepsilon$ denoted $\varepsilon_{max}$.
The maximum value of the Karhunen-Loeve approximation of $\lambda(\varepsilon)$ may be found within the determined interval with $M$ iterations, using an optimisation algorithm comprised in the group: the Newton-Raphson method, the Secant method, the Backtracking line search, the Nelder-Mead method and/ or golden section search, or other similar methods.
4. Utilise the determined biggest value $\lambda_{max}$ and corresponding value $\varepsilon_{max}$ as a starting point in a line search algorithm to find the maximum of the Karhunen-Loeve approximation of $\lambda(\varepsilon)$.

When having determined the biggest value $\lambda_{max}$ and corresponding value $\varepsilon_{max}$, it may be determined that the maximum value of the Karhunen-Loeve approximation of $\lambda(\varepsilon)$ is within an interval:

$$\varepsilon \in \frac{2\varepsilon_{max}-2-P}{2P} , \frac{2\varepsilon_{max}-P}{2P} .$$

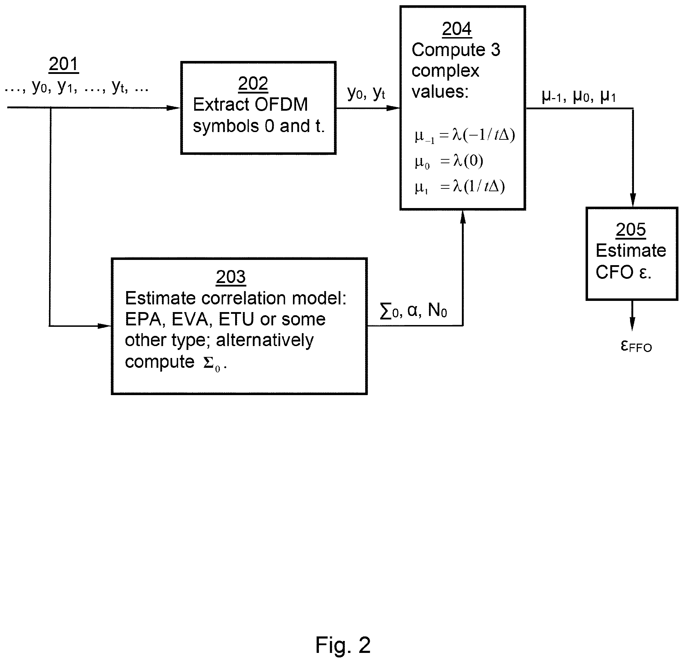

**Figure 2** illustrates an example of the discussed method, divided into a number of steps **201-205.**

Step **201** comprises receiving a first pilot signal $\mathbf{y}_{r1}$ and a second pilot signal $\mathbf{y}_{r2}$, from the transmitter 110. In step **202,** OFDM symbols are extracted. Step **203** comprises estimating correlation model: EPA, EVA, ETU or some other type. Alternatively $\Sigma_0$ may be estimated. Step **204** comprises computing 3 complex values $\mu_{-1}$, $\mu_0$, and $\mu_1$, as previously specified by a complex extension of a log-likelihood function $\lambda(\varepsilon)$, based on the estimated correlation model. Having computed $\mu_{-1}$, $\mu_0$, and $\mu_1$, the CFO $\varepsilon$ may be estimated.

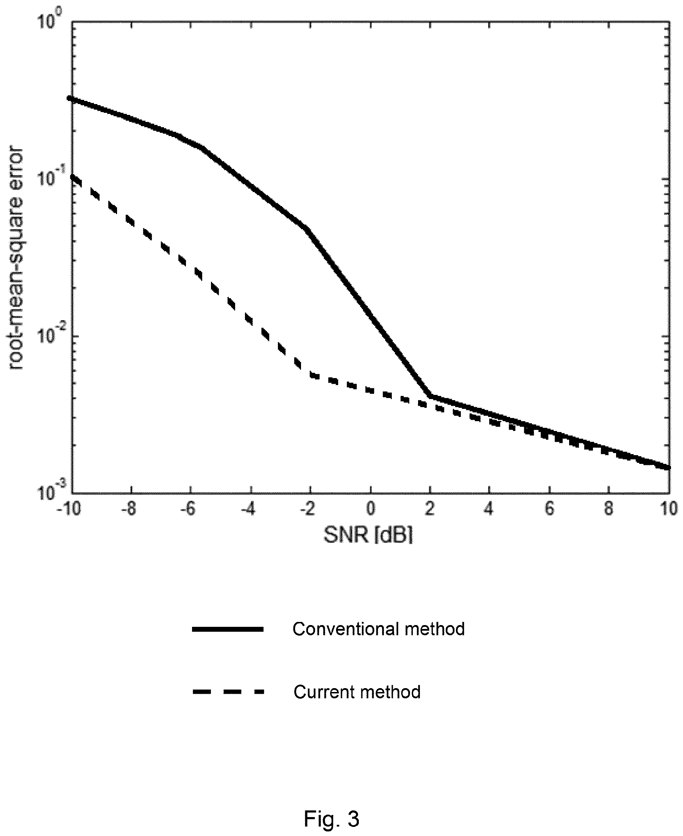

**Figure 3** illustrates performance of the current method in comparison to the conventional solution.

A case may be considered with 256 sub-carriers, i.e., $N_{FFT}$ = 256. The channels may be generated according to an EVA correlation model, and the Doppler level may be set such that $\alpha$=0.9. For simplicity, it may be assumed an all-pilot case, meaning that there is no payload date in the OFDM symbols 0 and $t$. Moreover, $t$=3 may be choosen, which follows the LTE standard as the spacing between two pilot-carrying OFDM symbols is 3. The CP-length is set to 15, i.e., $N_{CP}$ = 15. The estimator is using the robust correlation model in equation (3). The performance results are shown in Figure 3. The solid line curve is the root-mean-square error of the method according to conventional solutions, that is, by computing the three likelihoods $\mu_{-1},\mu_0,\mu_1$ using equation (2). The dashed line curve is the performance of an embodiment which computes the three values according to equation (1), with $\Sigma_0$ according to equation (3). As can be seen, there is about 5 dB gain at low Signal to Noise Ratio (SNR).

Instead of the herein used measurement SNR, any other similar appropriate measurement may be utilised in other embodiments, such as e.g. Signal-to-Interference-plus-Noise Ratio (SINR), Signal-to-Interference Ratio (SIR), Signal-to-Noise-plus-Interference Ratio (SNIR), Signal-to-Quantization-Noise Ratio (SQNR), Signal, noise and distortion (SINAD), or any inverted ratio such as Noise to Signal ratio, which compare the level of a desired signal to the level of background noise in a ratio.

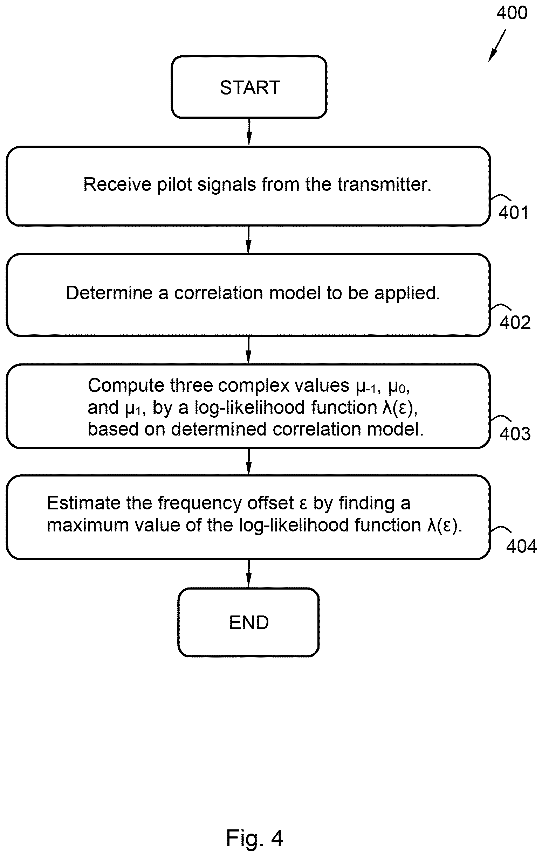

**Figure 4** illustrates an example of a method 400 in a receiver 120 according to some embodiments, for estimating a normalised frequency offset between a transmitter 110 and the receiver 120 in a wireless communication system 100, based on OFDM.

The normalised frequency offset may be a FFO, which also may be expressed: $\varepsilon_{EFFO}$, where $\varepsilon_{FFO} \in [-\frac{1}{2},\frac{1}{2}]$.

The wireless communication system 100 may be e.g. a 3GPP LTE system in some embodiments.

The receiver 120 may be represented by a mobile terminal or UE, and the transmitter 110 may be represented by a radio network node or eNodeB, or vice versa, in different embodiments.

However, in some embodiments, both the transmitter 110 and the receiver 120 may be represented by radio network nodes forming a backhaul link. Thanks to embodiments herein, tuning and adjustment of the respective radio network nodes may be simplified, and the communication link may be upheld, also when e.g. transmitter warmth creates or render additional frequency offset.

Also, one or both of the transmitter 110 and/ or the receiver 120 may be mobile, e.g. a mobile relay node or micro node on the roof of a bus, forming a backhaul link with a macro node.

Further, both the transmitter 110 and the receiver 120 may be represented by mobile terminals in an ad-hoc network communication solution.

To appropriately estimate the normalised frequency offset between transmitter 110 and receiver 120, the method 400 may comprise a number of actions **401-404.**

It is however to be noted that any, some or all of the described actions 401-404, may be performed in a somewhat different chronological order than the enumeration indicates, be performed simultaneously or even be performed in a completely reversed order according to different embodiments. Further, it is to be noted that some actions 401-404 may be performed in a plurality of alternative manners according to different embodiments, and that some such alternative manners may be performed only within some, but not necessarily all embodiments. The method 400 may comprise the following actions:

**Action 401**

A first pilot signal $\mathbf{y}_{r1}$ and a second pilot signal $\mathbf{y}_{r2}$ are received from the transmitter 110.

The first pilot signal $\mathbf{y}_{r1}$ is received at time r1 and the second pilot signal $\mathbf{y}_{r2}$ is received at time r2, where r1 $\neq$ r2.

The pilot signals $\mathbf{y}_{r1}$, $\mathbf{y}_{r2}$ are wireless radio signals, transmitted e.g. in a single frequency, transmitted over the wireless communication system 100 for supervisory, control, equalization, continuity, synchronisation, and/ or reference purposes.

By using the transmitted pilot signals $\mathbf{y}_{r1}$, $\mathbf{y}_{r2}$ that anyway are transmitted by the transmitter 110 for other purposes, an estimation of the FFO may be made without addition of any dedicated signalling, which is an advantage.

**Action 402**

A correlation model to be applied is determined based on correlation among involved sub-carrier channels at the first pilot signal $\mathbf{y}_{r1}$ and the second pilot signal $\mathbf{y}_{r2}$.

Such correlation model may comprise e.g. any of Extended Pedestrian A (EPA), Extended Vehicular A (EVA), Extended Typical Urban (ETU) correlation models when the correlation among involved sub-carrier channels at the first pilot signal $\mathbf{y}_{r1}$ and the second pilot signal $\mathbf{y}_{r2}$ is known. In some embodiments, the correlation model may comprise:

$$\Sigma_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix},$$

wherein $\Sigma_0$ is a diagonal matrix comprising the eigenvalues of the covariance among the sub-carriers at any given OFDM symbol, $N_{cp}$ is length of a Cyclic Prefix, CP, and $N_{FFT}$ is number of sub-carriers of the received pilot signals $\mathbf{y}_{r1}$, $\mathbf{y}_{r2}$.

**Action 403**

Three complex values $\mu_{-1}$, $\mu_0$, and $\mu_1$ are computed by a complex extension of a log-likelihood function $\lambda(\varepsilon)$, based on the determined correlation model.

**Action 404**

The frequency offset value $\varepsilon$ is estimated by finding a maximum value of a Karhunen-Loeve approximation of the log-likelihood function $\lambda(\varepsilon)$, based on the computed three complex values $\mu_{-1}$, $\mu_0$, and $\mu_1$.

The maximum value of the log-likelihood function $\lambda(\varepsilon)$ may be approximated by a Karhunen-Loeve approximation of $\lambda(\varepsilon)$, based on the computed three complex values $\mu_{-1}$, $\mu_0$, and $\mu_1$, where:

$$\mu_{-1} = \lambda_c(-1/t\Delta)$$

$$\mu_0 = \lambda_c(0) \qquad ,$$

$$\mu_1 = \lambda_c(1/t\Delta)$$

where $t$ is the distance between the received pilot signals $\mathbf{y}_{r1}$, $\mathbf{y}_{r2}$, $\Delta = (N_{FFT} + N_{cp})/N_{FFT}$, and the likelihood function satisfies $\lambda(\varepsilon) = Re(\lambda_c(\varepsilon))$.

The Karhunen-Loeve approximation of $\lambda_c(\varepsilon)$ may be given by:

$$\lambda_c(\varepsilon) \approx \alpha_{-1} \exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5)),$$

where the three coefficients are chosen so that:

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function may then be taken as:

$$\lambda(\varepsilon) \approx \mathrm{Re}(\lambda_c(\varepsilon)) = \mathrm{Re}(\alpha_{-1}\exp(-i2\pi\varepsilon(\Delta t - 0.5)) + \alpha_0\exp(-i2\pi\varepsilon(\Delta t)) + \alpha_1\exp(-i2\pi\varepsilon(\Delta t + 0.5)).$$

The log-likelihood function $\lambda(\varepsilon)$ may be defined as:

$$\lambda(\varepsilon) = -2\,\mathrm{Re}\left\{\tilde{\mathbf{y}}_0(\varepsilon)^H \left[(\mathbf{I}N_0 + \mathbf{\Sigma}_0(1-\alpha))^{-1} - (\mathbf{I}N_0 + \mathbf{\Sigma}_0(1-\alpha))^{-1}\right]\tilde{\mathbf{y}}_t(\varepsilon)\right\},$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the Inverse Fast Fourier Transform (IFFT) matrix and $\mathbf{Y}_k(\varepsilon)$ is the Fast Fourier Transform (FFT) of signal $k$, compensated for the frequency offset $\varepsilon$.

The maximum value of the Karhunen-Loeve approximation of the log-likelihood function $\lambda(\varepsilon)$ may be made by application of an optimisation algorithm comprised in the group: the Newton-Raphson method, the Secant method, the Backtracking line search, the Nelder-Mead method and/or golden section search, or other similar methods.

The maximum value of the Karhunen-Loeve approximation of the log-likelihood function $\lambda(\varepsilon)$ by: selecting $P$ values $\varepsilon$ such that $\varepsilon \in \{\varepsilon_1, \varepsilon_2, ..., \varepsilon_P\}$ within [-0.5, 0.5]; computing $P$ values of the Karhunen-Loeve approximation of $\lambda(\varepsilon)$ at $\varepsilon \in \{\varepsilon_1, \varepsilon_2, ..., \varepsilon_P\}$; determining the biggest value of the Karhunen-Loeve approximation of $\lambda(\varepsilon)$, denoted by $\lambda_{max}$, as $\lambda_{max} = \max \lambda(\varepsilon_m)$, $1 \leq m \leq P$, and corresponding value of $\varepsilon$ denoted $\varepsilon_{max}$; and utilising the determined biggest value $\lambda_{max}$ and corresponding value $\varepsilon_{max}$ as a starting point in a line search algorithm to find the maximum of the Karhunen-Loeve approximation of $\lambda(\varepsilon)$.

Having determined the biggest value $\lambda_{max}$ and corresponding value $\varepsilon_{max}$, it may be determined that the maximum value of the Karhunen-Loeve approximation of $\lambda(\varepsilon)$ is within an interval:

$$\varepsilon \in \frac{2\varepsilon_{max}-2-P}{2P}, \frac{2\varepsilon_{max}-P}{2P}.$$

The maximum value of the Karhunen-Loeve approximation of $\lambda(\varepsilon)$ within the determined interval with $M$ iterations may be made using an optimisation algorithm comprised in the group: the Newton-Raphson method, the Secant method, the Backtracking line search, the Nelder-Mead method and/ or golden section search, or other similar methods.

By performing the disclosed estimation by the quasi maximum likelihood method 400, but not a full maximum likelihood algorithm, accurate frequency offset estimation is achieved, without introducing the complex, time consuming and resource demanding efforts that a full maximum likelihood algorithm would require. Thereby, time and computational power are saved.

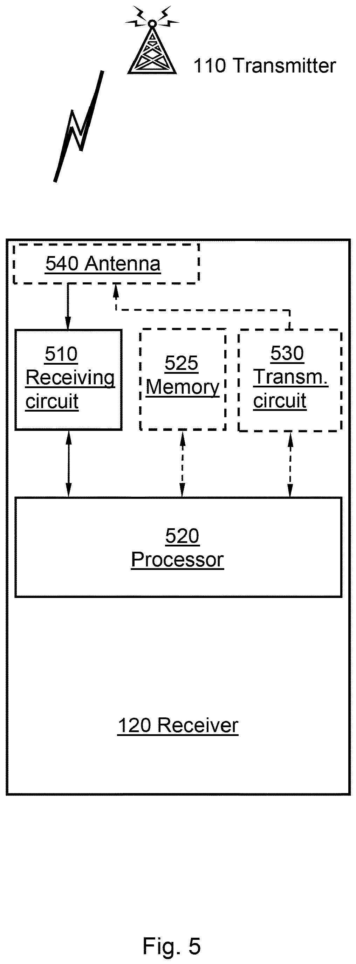

**Figure 5** illustrates an embodiment of a receiver 120 comprised in a wireless communication system 100. The receiver 120 is configured for performing at least some of the previously described method actions 401-404, for estimating a normalised frequency offset between a transmitter 110 and the receiver 120 in a wireless communication system 100, based on OFDM. The wireless communication network 100 may be based on 3GPP LTE.

Thus the receiver 120 is configured for performing the method 400 according to at least some of the actions 401-404. For enhanced clarity, any internal electronics or other components of the receiver 120, not completely indispensable for understanding the herein described embodiments has been omitted from Figure 5.

The receiver 120 comprises a receiving circuit **510,** configured to receive a first pilot signal $\mathbf{y}_{r1}$ and a second pilot signal $\mathbf{y}_{r2}$ from the transmitter 110. The receiver 120 may also be configured for receiving wireless signals from the transmitter 110 or from any other entity configured for wireless communication over a wireless interface according to some embodiments.

Furthermore, the receiver 120 comprises a processor **520,** configured to determine a correlation model based on correlation among involved sub-carrier channels at the first pilot signal $\mathbf{y}_{r1}$ and the second pilot signal $\mathbf{y}_{r2}$. The processor 520 is also configured to compute three complex values $\mu_{-1}$, $\mu_0$, and $\mu_1$, by a complex extension of a log-

likelihood function $\lambda(\varepsilon)$, based on the determined correlation model. Further, the processor 520 is also configured to estimate the normalised frequency offset value $\varepsilon$ by finding a maximum value of the log-likelihood function $\lambda(\varepsilon)$, based on the computed three complex values $\mu_{-1}$, $\mu_0$, and $\mu_1$.

The determined correlation model comprises any of Extended Pedestrian A (EPA), Extended Vehicular A (EVA), Extended Typical Urban (ETU), correlation models when the correlation among involved sub-carrier channels at the first pilot signal $\mathbf{y}_{r1}$ and the second pilot signal $\mathbf{y}_{r2}$ is known.

The processor 520 may also be configured to compute:

$$\boldsymbol{\Sigma}_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix}$$

wherein $\Sigma_0$ is a diagonal matrix comprising the eigenvalues of the covariance among the sub-carriers at any given OFDM symbol, $N_{cp}$ is length of a Cyclic Prefix, CP, and $N_{FFT}$ is number of sub-carriers of the received pilot signals $\mathbf{y}_{r1}$, $\mathbf{y}_{r2}$.

The processor 520 may in addition be configured to compute the maximum value of the log-likelihood function $\lambda(\varepsilon)$ is approximated by a Karhunen-Loeve approximation of $\lambda(\varepsilon)$, based on the computed three complex values $\mu_{-1}$, $\mu_0$, and $\mu_1$, where:

$$\mu_{-1} = \lambda_c(-1/t\Delta)$$

$$\mu_0 = \lambda_c(0) \qquad ,$$

$$\mu_1 = \lambda_c(1/t\Delta)$$

where t is the distance between the received pilot signals $\mathbf{y}_{r1}$, $\mathbf{y}_{r2}$, $\Delta = (N_{FFT} + N_{cp})/N_{FFT}$, and the likelihood function satisfies $\lambda(\varepsilon) = Re(\lambda_c(\varepsilon))$.

The processor 520 may in addition be configured to compute the Karhunen-Loeve approximation of $\lambda_c(\varepsilon)$, given by

$$\lambda_c(\varepsilon) \approx \alpha_{-1} \exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5)) ,$$

where the three coefficients are chosen so that

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function is then taken as:

$$\lambda(\varepsilon) \approx \operatorname{Re}(\lambda_c(\varepsilon)) = \operatorname{Re}(\alpha_{-1}\exp(-i2\pi\varepsilon(\Delta t - 0.5) + \alpha_0 \exp(-i2\pi\varepsilon(\Delta t) + \alpha_1 \exp(-i2\pi\varepsilon(\Delta t + 0.5)).$$

The log-likelihood function $\lambda(\varepsilon)$ may be defined as:

$$\lambda(\varepsilon) = -2\operatorname{Re}\left\{\tilde{\mathbf{y}}_0(\varepsilon)^H\left[(\mathbf{I}N_0 + \Sigma_0(1-\alpha))^{-1} - (\mathbf{I}N_0 + \Sigma_0(1-\alpha))^{-1}\right]\tilde{\mathbf{y}}_t(\varepsilon)\right\},$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the Inverse Fast Fourier Transform (IFFT) matrix and $\mathbf{Y}_k(\varepsilon)$ is the Fast Fourier Transform (FFT) of signal k, compensated for the frequency offset $\varepsilon$.

The processor 520 may in addition be configured to estimate the maximum value of the Karhunen-Loeve approximation of the log-likelihood function $\lambda(\varepsilon)$ by application of an optimisation algorithm comprised in the group: the Newton-Raphson method, the Secant method, the Backtracking line search, the Nelder-Mead method and/ or golden section search, or other similar methods.

The processor 520 may also be configured to estimate the maximum value of the Karhunen-Loeve approximation of the log-likelihood function $\lambda(\varepsilon)$ by: selecting P values $\varepsilon$ such that $\varepsilon \in \{\varepsilon_1, \varepsilon_2, ..., \varepsilon_P\}$ within [-0.5, 0.5]; computing P values of the Karhunen-Loeve approximation of $\lambda(\varepsilon)$ at $\varepsilon \in \{\varepsilon_1, \varepsilon_2, ..., \varepsilon_P\}$; determining the biggest value of the Karhunen-Loeve approximation of $\lambda(\varepsilon)$, denoted by $\lambda_{max}$, as $\lambda_{max} = \max \lambda(\varepsilon_m)$, $1 \le m \le P$, and corresponding value of $\varepsilon$ denoted $\varepsilon_{max}$; and utilising the determined biggest value $\lambda_{max}$ and corresponding value $\varepsilon_{max}$ as a starting point in a line search algorithm to find the maximum of the Karhunen-Loeve approximation of $\lambda(\varepsilon)$.

The processor 520 may further be configured to, when having determined the biggest value $\lambda_{max}$ and corresponding value $\varepsilon_{max}$, determine that the maximum value of the Karhunen-Loeve approximation of $\lambda(\varepsilon)$ is within an interval:

$$\varepsilon \in \frac{2\varepsilon_{max} - 2 - P}{2P}, \frac{2\varepsilon_{max} - P}{2P}.$$

The processor 520 may be further configured to find the maximum value of the Karhunen-Loeve approximation of $\lambda(\varepsilon)$ within the determined interval with M iterations, using an optimisation algorithm comprised in the group: the Newton-Raphson method, the Secant method, the Backtracking line search, the Nelder-Mead method and/ or golden section search, or other similar methods.

Such processor 520 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

In addition according to some embodiments, the receiver 120, in some embodiments, may also comprise at least one memory **525** in the receiver 120. The optional memory 525 may comprise a physical device utilised to store data or programs, i.e., sequences of instructions, on a temporary or permanent basis in a non-transitory manner. According to some embodiments, the memory 525 may comprise integrated circuits comprising silicon-based transistors. Further, the memory 525 may be volatile or non-volatile.

In addition, the receiver 120 may comprise a transmitting circuit **530,** configured for transmitting wireless signals within the wireless communication system 100.

Furthermore, the receiver 120 may also comprise an antenna **540.** The antenna 540 may optionally comprise an array of antenna elements in an antenna array in some embodiments.

The actions 401-404 to be performed in the receiver 120 may be implemented through the one or more processors 520 in the receiver 120 together with computer program product for performing the functions of the actions 401-404.

Thus a non-transitory computer program comprising program code for performing the method 400 according to any of actions 401-404, for estimating frequency offset between a transmitter 110 and the receiver 120 in a wireless communication system 100, based on OFDM, when the computer program is loaded into a processor 520 of the receiver 120.

The non-transitory computer program product mentioned above may be provided for instance in the form of a non-transitory data carrier carrying computer program code for performing at least some of the actions 401-404 according to some embodiments when being loaded into the processor 520. The data carrier may be, e.g., a hard disk, a CD ROM disc, a memory stick, an optical storage device, a magnetic storage device or any other appropriate medium such as a disk or tape that may hold machine readable data in a non-transitory manner. The non-transitory computer program product may furthermore be provided as computer program code on a server and downloaded to the receiver 120, e.g., over an Internet or an intranet connection.

The terminology used in the description of the embodiments as illustrated in the accompanying drawings is not intended to be limiting of the described method 400 and/ or receiver 120. Various changes, substitutions and/ or alterations may be made, without departing from the solution embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

**Claims**

1. A receiver (120), for estimating a normalised frequency offset value $\varepsilon$ between a transmitter (110) and the receiver (120) in a wireless communication system (100), based on Orthogonal Frequency Division Multiplexing, OFDM, said receiver (120) comprising:

   a receiving circuit (510), configured to receive a first pilot signal $\mathbf{y}_{r1}$ and a second pilot signal $\mathbf{y}_{r2}$ from the transmitter (110); and
   a processor (520), configured to determine a correlation model based on whether a correlation among involved sub-carrier channels at the first pilot signal $\mathbf{y}_{r1}$ and the second pilot signal $\mathbf{y}_{r2}$ is known or not, and configured to compute three complex values $\mu_{-1}$, $\mu_0$, and $\mu_1$, by a complex extension of a log-likelihood function $\lambda(\varepsilon)$, based on the determined correlation model; and also configured to estimate the normalised frequency offset value $\varepsilon$ by finding a maximum value of the log-likelihood function $\lambda(\varepsilon)$, based on the computed three complex values $\mu_{-1}$, $\mu_0$, and $\mu_1$, wherein
   the processor (520) is configured to determine the correlation model based on any of Extended Pedestrian A, EPA, Extended Vehicular A, EVA, Extended Typical Urban, ETU, correlation models when the correlation among involved sub-carrier channels at the first pilot signal $\mathbf{y}_{r1}$ and the second pilot signal $\mathbf{y}_{r2}$ is known.

2. The receiver (120) according to claim 1, wherein the processor (520) is configured to determine the correlation model by computing $\mathbf{Q}\Sigma_{\mathbf{0}}\mathbf{Q}^H$, where Q is the IFFT matrix and:

$$\Sigma_0 = \begin{bmatrix} \dfrac{N_{FFT}}{N_{CP}} & & & & \\ & \ddots & & & \\ & & \dfrac{N_{FFT}}{N_{CP}} & & \\ & & & 0 & \\ & & & & \ddots & \\ & & & & & 0 \end{bmatrix},$$

   wherein $\Sigma_0$ is a diagonal matrix comprising the eigenvalues of the covariance among the sub-carriers at any given OFDM symbol, $N_{cp}$ is length of a Cyclic Prefix, CP, and $N_{FFT}$ is number of sub-carriers of the received pilot signals $\mathbf{y}_{r1}$, $\mathbf{y}_{r2}$, when the correlation among involved sub-carrier channels at the first pilot signal $\mathbf{y}_{r1}$ and the second pilot signal $\mathbf{y}_{r2}$ is unknown.

3. The receiver (120) according to any of claims 1-2, wherein the processor (520) is configured to approximate the maximum value of the log-likelihood function $\lambda(\varepsilon)$ by a Karhunen-Loeve approximation of $\lambda(\varepsilon)$, based on the computed three complex values $\mu_{-1}$, $\mu_0$, and $\mu_1$, where:

$$\mu_{-1} = \lambda_c(-1/t\Delta)$$

$$\mu_0 = \lambda_c(0) \quad ,$$

$$\mu_1 = \lambda_c(1/t\Delta)$$

where $t$ is the distance between the received pilot signals $\mathbf{y}_{r1}$, $\mathbf{y}_{r2}$, $\Delta = (N_{FFT} + N_{cp})/N_{FFT}$.

4. The receiver (120) according to claim 3, wherein the processor (520) is configured to perform the Karhunen-Loeve approximation of $\lambda(\varepsilon)$, wherein the log-likelihood function $\lambda(\varepsilon)$ satisfies: $\lambda(\varepsilon) = Re(\lambda_c(\varepsilon))$.

5. The receiver (120) according to any of claims 3 or 4, wherein the processor (520) is configured to perform the Karhunen-Loeve approximation of $\lambda_c(\varepsilon)$, given by

$$\lambda_c(\varepsilon) \approx \alpha_{-1}\exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5)),$$

where the three coefficients are chosen so that

$$\mu_{-1} = \lambda_c(-1/t\Delta)$$

$$\mu_0 = \lambda_c(0)$$

$$\mu_1 = \lambda_c(1/t\Delta)$$

is satisfied, and wherein the Karhunen-Loeve representation of the likelihood function is then taken as:

$$\lambda(\varepsilon) \approx \operatorname{Re}(\lambda_c(\varepsilon)) = \operatorname{Re}(\alpha_{-1}\exp(-i2\pi\varepsilon(\Delta t - 0.5)) + \alpha_0 \exp(-i2\pi\varepsilon(\Delta t)) + \alpha_1 \exp(-i2\pi\varepsilon(\Delta t + 0.5))).$$

6. The receiver (120) according to any of claims 1-5, wherein the processor (520) is configured to perform the Karhunen-Loeve approximation of $\lambda_c(\varepsilon)$, wherein the log-likelihood function $\lambda(\varepsilon)$ is defined as:

$$\lambda(\varepsilon) = -2\operatorname{Re}\left\{ \tilde{\mathbf{y}}_0(\varepsilon)^H \left[ (\mathbf{I}N_0 + \Sigma_0(1-\alpha))^{-1} - (\mathbf{I}N_0 + \Sigma_0(1-\alpha))^{-1} \right] \tilde{\mathbf{y}}_t(\varepsilon) \right\},$$

wherein $\alpha$ represents the correlation between two OFDM symbols in time and $\tilde{\mathbf{y}}_k(\varepsilon) = \mathbf{Q}\mathbf{Y}_k(\varepsilon)$, where $\mathbf{Q}$ is the Inverse Fast Fourier Transform, IFFT, matrix and $\mathbf{Y}_k(\varepsilon)$ is the Fast Fourier Transform, FFT, of signal $k$, compensated for the frequency offset $\varepsilon$.

7. The receiver (120) according to any of claims 1-6, wherein the processor (520) is configured to estimate the maximum value of the Karhunen-Loeve approximation of the log-likelihood function $\lambda(\varepsilon)$ by application of an optimisation algorithm comprised in the group: the Newton-Raphson method, the Secant method, the Backtracking line search, the Nelder-Mead method or golden section search.

8. The receiver (120) according to any of claims 1-7, wherein the processor (520) is configured to estimate the maximum value of the Karhunen-Loeve approximation of the log-likelihood function $\lambda(\varepsilon)$ by:

selecting $P$ values $\varepsilon$ such that $\varepsilon \in \{\varepsilon_1, \varepsilon_2, ..., \varepsilon_P\}$ within [-0.5, 0.5];

computing *P* values of the Karhunen-Loeve approximation of $\lambda(\varepsilon)$ at $\varepsilon \in \{\varepsilon_1, \varepsilon_2, ..., \varepsilon_P\}$;
determining the biggest value of the Karhunen-Loeve approximation of $\lambda(\varepsilon)$, denoted by $\lambda_{max}$, as $\lambda_{max} = \max \lambda(\varepsilon_m)$, $1 \leq m \leq P$, and corresponding value of $\varepsilon$ denoted $\varepsilon_{max}$; and
utilising the determined biggest value $\lambda_{max}$ and corresponding value $\varepsilon_{max}$ as a starting point in a line search algorithm to find the maximum of the Karhunen-Loeve approximation of $\lambda(\varepsilon)$.

9.  The receiver (120) according to claim 8, wherein, the processor (520) is configured to, when having determined the biggest value $\lambda_{max}$ and corresponding value $\varepsilon_{max}$, determine that the maximum value of the Karhunen-Loeve approximation of $\lambda(\varepsilon)$ is within an interval:

$$\varepsilon \in \frac{2\varepsilon_{max}-2-P}{2P}, \frac{2\varepsilon_{max}-P}{2P}.$$

10. The receiver (120) according to claim 9, wherein the processor (520) is configured to find the maximum value of the Karhunen-Loeve approximation of $\lambda(\varepsilon)$ within the determined interval with *M* iterations, using an optimisation algorithm comprised in the group: the Newton-Raphson method, the Secant method, the Backtracking line search, the Nelder-Mead method or golden section search.

11. The receiver (120) according to any of claims 1-10, wherein the receiver (120) is represented by a User Equipment, UE, and the transmitter (110) is represented by a radio network node.

12. The receiver (120) according to any of claims 1-10, wherein the receiver (120) is represented by a radio network node, and the transmitter (110) is represented by a UE.

13. A method (400) in a receiver (120), for estimating a normalised frequency offset value $\varepsilon$ between a transmitter (110) and the receiver (120) in a wireless communication system (100), based on Orthogonal Frequency Division Multiplexing, OFDM, the method (400) comprising:

    receiving (401) a first pilot signal $\mathbf{y}_{r1}$ and a second pilot signal $\mathbf{y}_{r2}$, from the transmitter (110);
    determining (402) a correlation model to be applied based on whether a correlation among involved sub-carrier channels at the first pilot signal $\mathbf{y}_{r1}$ and the second pilot signal $\mathbf{y}_{r2}$ is known or not, comprising: determining the correlation model based on any of Extended Pedestrian A, EPA, Extended Vehicular A, EVA, Extended Typical Urban, ETU, correlation models when the correlation among involved sub-carrier channels at the first pilot signal $\mathbf{y}_{r1}$ and the second pilot signal $\mathbf{y}_{r2}$ is known;
    computing (403) three complex values $\mu_{-1}$, $\mu_0$, and $\mu_1$, by a complex extension of a log-likelihood function $\lambda(\varepsilon)$, based on the determined correlation model; and
    estimating (404) the frequency offset value $\varepsilon$ by finding a maximum value of a Karhunen-Loeve approximation of the log-likelihood function $\lambda(\varepsilon)$, based on the computed (403) three complex values $\mu_{-1}$, $\mu_0$, and $\mu_1$.

14. The method (400) according to claim 13, further comprising:
    determining the correlation model by computing $\boldsymbol{Q}\boldsymbol{\Sigma_0}\boldsymbol{Q}^H$, where Q is the IFFT matrix and:

$$\boldsymbol{\Sigma}_0 = \begin{bmatrix} \dfrac{N_{FFT}}{N_{CP}} & & & & & \\ & \ddots & & & & \\ & & \dfrac{N_{FFT}}{N_{CP}} & & & \\ & & & 0 & & \\ & & & & \ddots & \\ & & & & & 0 \end{bmatrix},$$

    wherein $\Sigma_0$ is a diagonal matrix comprising the eigenvalues of the covariance among the sub-carriers at any given OFDM symbol, $N_{cp}$ is length of a Cyclic Prefix, CP, and $N_{FFT}$ is number of sub-carriers of the received pilot signals $\mathbf{y}_{r1}$, $\mathbf{y}_{r2}$, when the correlation among involved sub-carrier channels at the first pilot signal $\mathbf{y}_{r1}$ and the second pilot

signal $\mathbf{y}_{r2}$ is unknown.

**15.** A computer program comprising program code for performing a method (400) according to any of claims 13-14, when the computer program is performed on a processor (520).

**Patentansprüche**

**1.** Empfänger (120) zum Schätzen eines normierten Frequenzoffsetwerts ε zwischen einem Sender (110) und dem Empfänger (120) in einem Drahtloskommunikationssystem (100) basierend auf Orthogonal-Frequenzmultiplexing bzw. OFDM, wobei der Empfänger (120) Folgendes umfasst:

eine Empfangsschaltung (510), die ausgelegt ist zum Empfangen eines ersten Pilotsignals $\mathbf{y}_{r1}$ und eines zweiten Pilotsignals $\mathbf{y}_{r2}$ vom Sender (110); und
einen Prozessor (520), der ausgelegt ist zum Bestimmen eines Korrelationsmodells basierend darauf, ob eine Korrelation unter beteiligten Subträgerkanälen am ersten Pilotsignal $\mathbf{y}_{r1}$ und am zweiten Pilotsignal $\mathbf{y}_{r2}$ bekannt ist oder nicht, und ausgelegt ist zum Berechnen von drei komplexen Werten $\mu_{-1}$, $\mu_0$ und $\mu_1$ durch eine komplexe Erweiterung einer Log-Likelihood-Funktion $\lambda(\varepsilon)$ basierend auf dem bestimmten Korrelationsmodell und außerdem ausgelegt ist zum Schätzen des normierten Frequenzoffsetwerts ε durch Finden eines Maximalwerts der Log-Likelihood-Funktion $\lambda(\varepsilon)$ basierend auf den berechneten drei komplexen Werten $\mu_{-1}$, $\mu_0$ und $\mu_1$, wobei der Prozessor (520) ausgelegt ist zum Bestimmen des Korrelationsmodells basierend auf einem beliebigen von "Extended Pedestrian A"- bzw. EPA-, "Extended Vehicular A"- bzw. EVA-, "Extended Typical Urban"- bzw. ETU-Korrelationsmodellen, wenn die Korrelation unter beteiligten Subträgerkanälen am ersten Pilotsignal $\mathbf{y}_{r1}$ und am zweiten Pilotsignal $\mathbf{y}_{r2}$ bekannt ist.

**2.** Empfänger (120) nach Anspruch 1, wobei der Prozessor (520) ausgelegt ist zum Bestimmen des Korrelationsmodells durch Berechnen von $\boldsymbol{Q}\boldsymbol{\Sigma_0}\boldsymbol{Q^H}$, wobei Q die IFFT-Matrix ist und:

$$\boldsymbol{\Sigma}_0 = \begin{bmatrix} \frac{N_{FTT}}{N_{CP}} & & & & & \\ & \ddots & & & & \\ & & \frac{N_{FFT}}{N_{CP}} & & & \\ & & & 0 & & \\ & & & & \ddots & \\ & & & & & 0 \end{bmatrix},$$

wobei $\Sigma_0$ eine Diagonalmatrix ist, die die Eigenwerte der Kovarianz unter den Subträgern bei einem gegebenen OFDM-Symbol umfasst, $N_{cp}$ die Länge eines zyklischen Präfixes bzw. CP ist und $N_{FFT}$ die Anzahl von Subträgern der empfangenen Pilotsignale $\mathbf{y}_{r1}$, $\mathbf{y}_{r2}$ ist, wenn die Korrelation unter beteiligten Subträgerkanälen am ersten Pilotsignal $\mathbf{y}_{r1}$ und am zweiten Pilotsignal $\mathbf{y}_{r2}$ unbekannt ist.

**3.** Empfänger (120) nach einem der Ansprüche 1-2, wobei der Prozessor (520) ausgelegt ist zum Approximieren des Maximalwerts der Log-Likelihood-Funktion $\lambda(\varepsilon)$ durch eine Karhunen-Loeve-Approximation von $\lambda(\varepsilon)$ basierend auf den berechneten drei komplexen Werten $\mu_{-1}$, $\mu_0$ und $\mu_1$, wobei:

$$\mu_{-1} = \lambda_c(-1/t\Delta)$$

$$\mu_0 = \lambda_c(0)$$

$$\mu_1 = \lambda_c(1/t\Delta),$$

wobei t der Abstand zwischen den empfangenen Pilotsignalen $\mathbf{y}_{r1}$, $\mathbf{y}_{r2}$ ist, $\Delta = (N_{FFT}+N_{cp})/N_{FFT}$.

4. Empfänger (120) nach Anspruch 3, wobei der Prozessor (520) ausgelegt ist zum Durchführen der Karhunen-Loeve-Approximation von $\lambda(\varepsilon)$, wobei die Log-Likelihood-Funktion $\lambda(\varepsilon)$ Folgendes erfüllt: $\lambda(\varepsilon) = Re(\lambda_c(\varepsilon))$.

5. Empfänger (120) nach einem der Ansprüche 3 oder 4, wobei der Prozessor (520) ausgelegt ist zum Durchführen der Karhunen-Loeve-Approximation von $\lambda_c(\varepsilon)$, gegeben durch

$$\lambda_c(\varepsilon) \approx \alpha_{-1}\exp(-i2\pi\varepsilon(\Delta t - 0{,}5)) + \alpha_0 \exp(-i2\pi\varepsilon(\Delta t)) + \alpha_1\exp(-i2\pi\varepsilon(\Delta t + 0{,}5)),$$

wobei die drei Koeffizienten so gewählt werden, dass

$$\mu_{-1} = \lambda_c(-1/t\Delta)$$

$$\mu_0 = \lambda_c(0)$$

$$\mu_1 = \lambda_c(1/t\Delta)$$

erfüllt ist, und wobei die Karhunen-Loeve-Repräsentation der Likelihood-Funktion dann als

$$\lambda(\varepsilon) \approx Re\big(\lambda_c(\varepsilon)\big) = Re(\alpha_{-1}\exp(-i2\pi\varepsilon(\Delta t - 0{,}5)) + \alpha_0 \exp\big(-i2\pi\varepsilon(\Delta t)\big) + \alpha_1 \exp\big(-i2\pi\varepsilon(\Delta t + 0{,}5)\big)$$

genommen wird.

6. Empfänger (120) nach einem der Ansprüche 1-5, wobei der Prozessor (520) ausgelegt ist zum Durchführen der Karhunen-Loeve-Approximation von $\lambda_c(\varepsilon)$, wobei die Log-Likelihood-Funktion $\lambda(\varepsilon)$ als Folgendes definiert ist:

$$\lambda(\varepsilon) = -2Re\left\{\widetilde{\boldsymbol{y}}_0(\varepsilon)^H \left[ (\mathrm{I}N_0 + \boldsymbol{\Sigma}_0(1 - \alpha))^{-1} - \big(\mathrm{I}N_0 + \boldsymbol{\Sigma}_0(1 - \alpha)\big)^{-1} \right] \widetilde{\boldsymbol{y}}_t(\varepsilon) \right\},$$

wobei $\alpha$ die Korrelation zwischen zwei OFDM-Symbolen in der Zeit repräsentiert und $\widetilde{\boldsymbol{y}}_k(\varepsilon) = \mathbf{Q}\mathbf{Y}_k(\varepsilon)$, wobei $\mathbf{Q}$ die Matrix der inversen schnellen Fourier-Transformation bzw. IFFT ist und $\mathbf{Y}_k(\varepsilon)$ die schnelle Fourier-Transformation bzw. FFT eines Signals $k$ ist, für den Frequenzoffset $\varepsilon$ kompensiert.

7. Empfänger (120) nach einem der Ansprüche 1-6, wobei der Prozessor (520) ausgelegt ist zum Schätzen des Maximalwerts der Karhunen-Loeve-Approximation der Log-Likelihood-Funktion $\lambda(\varepsilon)$ durch eine Anwendung eines Optimierungsalgorithmus, der in der folgenden Gruppe enthalten ist: das Newton-Raphson-Verfahren, das Sekantenverfahren, die Backtracking-Liniensuche, das Nelder-Mead-Verfahren oder die Goldener-Schnitt-Suche.

8. Empfänger (120) nach einem der Ansprüche 1-7, wobei der Prozessor (520) ausgelegt ist zum Schätzen des Maximalwerts der Karhunen-Loeve-Approximation der Log-Likelihood-Funktion $\lambda(\varepsilon)$ durch Folgendes:

   Auswählen von P Werten $\varepsilon$, sodass $\varepsilon \in \{\varepsilon_1, \varepsilon_2, ..., \varepsilon_P\}$ innerhalb von [-0,5; 0,5] liegt;
   Berechnen von P Werten der Karhunen-Loeve-Approximation von $\lambda(\varepsilon)$ bei $\varepsilon \in \{\varepsilon_1, \varepsilon_2, ..., \varepsilon_P\}$;
   Bestimmen des größten Werts der Karhunen-Loeve-Approximation von $\lambda(\varepsilon)$, bezeichnet als $\lambda_{max}$, als $\lambda_{max} = \max \lambda(\varepsilon_m)$, $1 \leq m \leq P$, und eines entsprechenden Werts von $\varepsilon$, bezeichnet $\varepsilon_{max}$; und
   Nutzen des bestimmten größten Werts $\lambda_{max}$ und des entsprechenden Werts $\varepsilon_{max}$ als ein Startpunkt in einem Liniensuchalgorithmus, um das Maximum der Karhunen-Loeve-Approximation von $\lambda(\varepsilon)$ zu finden.

9. Empfänger (120) nach Anspruch 8, wobei der Prozessor (520) ausgelegt ist zum, wenn er den größten Wert $\lambda_{max}$ und den entsprechenden Wert $\varepsilon_{max}$ bestimmt hat, Bestimmen, dass der Maximalwert der Karhunen-Loeve-Approximation von $\lambda(\varepsilon)$ innerhalb eines Intervalls liegt:

$$\varepsilon \in \frac{2\varepsilon_{max}\text{-}2\text{-}P}{2P}, \frac{2\varepsilon_{max}\text{-}P}{2P}.$$

**10.** Empfänger (120) nach Anspruch 9, wobei der Prozessor (520) ausgelegt ist zum Finden des Maximalwerts der Karhunen-Loeve-Approximation von $\lambda(\varepsilon)$ innerhalb des bestimmten Intervalls mit $M$ Iterationen unter Verwendung eines Optimierungsalgorithmus, der in der folgenden Gruppe enthalten ist: das Newton-Raphson-Verfahren, das Sekantenverfahren, die Backtracking-Liniensuche, das Nelder-Mead-Verfahren oder die Goldener-Schnitt-Suche.

**11.** Empfänger (120) nach einem der Ansprüche 1-10, wobei der Empfänger (120) durch ein Benutzergerät bzw. UE repräsentiert wird und der Sender (110) durch einen Funknetzknoten repräsentiert wird.

**12.** Empfänger (120) nach einem der Ansprüche 1-10, wobei der Empfänger (120) durch einen Funknetzknoten repräsentiert wird und der Sender (110) durch ein UE repräsentiert wird.

**13.** Verfahren (400) in einem Empfänger (120) zum Schätzen eines normierten Frequenzoffsetwerts $\varepsilon$ zwischen einem Sender (110) und dem Empfänger (120) in einem Drahtloskommunikationssystem (100) basierend auf Orthogonal-Frequenzmultiplexing bzw. OFDM, wobei das Verfahren (400) Folgendes umfasst:

Empfangen (401) eines ersten Pilotsignals $\mathbf{y}_{r1}$ und eines zweiten Pilotsignals $\mathbf{y}_{r2}$ vom Sender (110); und Bestimmen (402) eines Korrelationsmodells, das basierend darauf angewendet werden soll, ob eine Korrelation unter beteiligten Subträgerkanälen am ersten Pilotsignal $\mathbf{y}_{r1}$ und am zweiten Pilotsignal $\mathbf{y}_{r2}$ bekannt ist oder nicht, umfassend: Bestimmen des Korrelationsmodells basierend auf einem beliebigen von "Extended Pedestrian A"- bzw. EPA-, "Extended Vehicular A"- bzw. EVA-, "Extended Typical Urban"- bzw. ETU-Korrelationsmodellen, wenn die Korrelation unter beteiligten Subträgerkanälen am ersten Pilotsignal $\mathbf{y}_{r1}$ und am zweiten Pilotsignal $\mathbf{y}_{r2}$ bekannt ist; Berechnen (403) von drei komplexen Werten $\mu_{-1}$, $\mu_0$ und $\mu_1$, durch eine komplexe Erweiterung einer Log-Likelihood-Funktion $\lambda(\varepsilon)$ basierend auf dem bestimmten Korrelationsmodell und Schätzen (404) des normierten Frequenzoffsetwerts $\varepsilon$ durch Finden eines Maximalwerts einer Karhunen-Loeve-Approximation der Log-Likelihood-Funktion $\lambda(\varepsilon)$ basierend auf den berechneten (403) drei komplexen Werten $\mu_{-1}$, $\mu_0$ und $\mu_1$.

**14.** Verfahren (400) nach Anspruch 13, das ferner Folgendes umfasst:
Bestimmen des Korrelationsmodells durch Berechnen von $\boldsymbol{Q}\Sigma_0\boldsymbol{Q^H}$, wobei Q die IFFT-Matrix ist und:

$$\boldsymbol{\Sigma}_0 = \begin{bmatrix} \frac{N_{FTT}}{N_{CP}} & & & & & \\ & \ddots & & & & \\ & & \frac{N_{FFT}}{N_{CP}} & & & \\ & & & 0 & & \\ & & & & \ddots & \\ & & & & & 0 \end{bmatrix},$$

wobei $\Sigma_0$ eine Diagonalmatrix ist, die die Eigenwerte der Kovarianz unter den Subträgern bei einem gegebenen OFDM-Symbol umfasst, $N_{cp}$ die Länge eines zyklischen Präfixes bzw. CP ist und $N_{FFT}$ die Anzahl von Subträgern der empfangenen Pilotsignale $\mathbf{y}_{r1}$, $\mathbf{y}_{r2}$ ist, wenn die Korrelation unter beteiligten Subträgerkanälen am ersten Pilotsignal $\mathbf{y}_{r1}$ und am zweiten Pilotsignal $\mathbf{y}_{r2}$ unbekannt ist.

**15.** Computerprogramm, das Programmcode zum Durchführen eines Verfahrens (400) nach einem der Ansprüche 13-14 umfasst, wenn das Computerprogramm auf einem Prozessor (520) durchgeführt wird.

**Revendications**

**1.** Récepteur (120), destiné à estimer une valeur de décalage de fréquence normalisé $\varepsilon$ entre un émetteur (110) et le récepteur (120) dans un système de communication sans fil (100), sur la base d'un multiplexage par répartition orthogonale de la fréquence (OFDM), ledit récepteur (120) comprenant :

un circuit de réception (510), conçu pour recevoir un premier signal pilote $y_{r1}$ et un second signal pilote $y_{r2}$ en provenance de l'émetteur (110) ; et

un processeur (520), conçu pour déterminer un modèle de corrélation selon qu'une corrélation parmi des canaux de sous-porteuse impliqués au niveau du premier signal pilote $y_{r1}$ et du second signal pilote $y_{r2}$ est connue ou non, et conçu pour calculer trois valeurs complexes $\mu_{-1}$, $\mu_0$ et $\mu_1$, par une extension complexe d'une fonction de probabilité logarithmique $\lambda(\varepsilon)$, sur la base du modèle de corrélation déterminé ; et

également conçu pour estimer la valeur de décalage de fréquence normalisé $\varepsilon$ en trouvant une valeur maximale de la fonction de probabilité logarithmique $\lambda(\varepsilon)$, sur la base des trois valeurs complexes $\mu_{-1}$, $\mu_0$ et $\mu_1$ calculées, le processeur (520) étant conçu pour déterminer le modèle de corrélation sur la base d'un modèle quelconque parmi des modèles de corrélation piéton étendu A (EPA), véhiculaire étendu A (EVA) et urbain type étendu (ETU) quand la corrélation parmi des canaux de sous-porteuse impliqués au niveau du premier signal pilote $Y_{r1}$ et du second signal pilote $y_{r2}$ est connue.

2.  Récepteur (120) selon la revendication 1, dans lequel le processeur (520) est conçu pour déterminer le modèle de corrélation en calculant $\boldsymbol{Q \Sigma_0 Q^H}$, où Q est la matrice IFFT et :

$$\Sigma_0 = \begin{bmatrix} \frac{N_{FFT}}{N_{EP}} & & & & & \\ & \ddots & & & & \\ & & \frac{N_{FFT}}{N_{EP}} & & & \\ & & & 0 & & \\ & & & & \ddots & \\ & & & & & 0 \end{bmatrix},$$

où $\Sigma_0$ est une matrice diagonale comprenant les valeurs propres de la covariance parmi les sous-porteuses au niveau d'un quelconque symbole OFDM donné, $N_{cp}$ est la longueur d'un préfixe cyclique (CP) et $N_{FFT}$ est le nombre de sous-porteuses des signaux pilotes reçus $y_{r1}$, $y_{r2}$, quand la corrélation parmi des canaux de sous-porteuse impliqués au niveau du premier signal pilote $y_{r1}$ et du second signal pilote $y_{r2}$ est connue.

3.  Récepteur (120) selon l'une quelconque des revendications 1 et 2, dans lequel le processeur (520) est conçu pour approximer la valeur maximale de la fonction de probabilité logarithmique $\lambda(\varepsilon)$ par une approximation de Karhunen-Loeve de $\lambda(\varepsilon)$, sur la base des trois valeurs complexes $\mu_{-1}$, $\mu_0$ et $\mu_1$ calculées, définies comme suit :

$$\mu_{-1} = \lambda_c(-1/t\Delta),$$

$$\mu_0 = \lambda_c(0),$$

$$\mu_1 = \lambda_c(1/t\Delta),$$

où t est la distance entre les signaux pilotes reçus $Y_{r1}$, $Y_{r2}$, $\Delta = (N_{FFT} + N_{cp})/N_{FFT}$.

4.  Récepteur (120) selon la revendication 3, dans lequel le processeur (520) est conçu pour réaliser l'approximation de Karhunen-Loeve de $\lambda(\varepsilon)$, la fonction de probabilité logarithmique $\lambda(\varepsilon)$ satisfaisant : $\lambda(\varepsilon) = Re(\lambda_c(\varepsilon))$.

5.  Récepteur (120) selon l'une quelconque des revendications 3 et 4, dans lequel le processeur (520) est conçu pour réaliser l'approximation de Karhunen-Loeve de $\lambda_c(\varepsilon)$, donnée par :

$$\lambda_c(\varepsilon) \approx \alpha_{-1}\exp(-i2\pi\varepsilon(\Delta t - 0{,}5) + \alpha_0\exp(-i2\pi\varepsilon(\Delta t) + \alpha_1\exp(-i2\pi\varepsilon(\Delta t + 0{,}5),$$

où les trois coefficients sont choisis de sorte que les relations

$$\mu_{-1} = \lambda_c(-1/t\Delta),$$

$$\mu_0 = \lambda_c(0),$$

$$\mu_1 = \lambda_c(1/t\Delta),$$

soient satisfaites, et la représentation de Karhunen-Loeve de la fonction de probabilité étant ensuite exprimées comme :

$$\lambda(\varepsilon) \approx \mathrm{Re}\big(\lambda_c(\varepsilon)\big) = \mathrm{Re}(\alpha_{-1}\exp(-i2\pi\varepsilon(\Delta t - 0{,}5) + \alpha_0\exp(-i2\pi\varepsilon(\Delta t) +$$
$$\alpha_1\exp(-i2\pi\varepsilon(\Delta t + 0{,}5)).$$

**6.** Récepteur (120) selon l'une quelconque des revendications 1 à 5, dans lequel le processeur (520) est conçu pour réaliser l'approximation de Karhunen-Loeve de $\lambda_c(\varepsilon)$, la fonction de probabilité logarithmique $\lambda(\varepsilon)$ étant définie comme :

$$\lambda(\varepsilon) = -2\mathrm{Re}\left\{\widetilde{y_0}(\varepsilon)^H\left[\big(\mathbf{I}N_0 + \boldsymbol{\Sigma}_0(1-\alpha)\big)^{-1} - \big(\mathbf{I}N_0 + \boldsymbol{\Sigma}_0(1-\alpha)\big)^{-1}\right]\widetilde{\mathbf{y}}_1(\varepsilon)\right\},$$

où $\alpha$ représente la corrélation entre deux symboles OFDM dans le temps et $\widetilde{y_K}(\varepsilon) = \mathbf{QY}_k(\varepsilon)$, où $\mathbf{Q}$ est la matrice de transformée de Fourier rapide inverse (IFFT) et $\mathbf{Y_k}(\varepsilon)$ est la transformée de Fourier rapide (FFT) d'un signal $k$, compensé pour le décalage de fréquence $\varepsilon$.

**7.** Récepteur (120) selon l'une quelconque des revendications 1 à 6, dans lequel le processeur (520) est conçu pour estimer la valeur maximale de l'approximation de Karhunen-Loeve de la fonction de probabilité logarithmique $\lambda(\varepsilon)$ en appliquant un algorithme d'optimisation compris dans le groupe constitué de : la méthode de Newton-Raphson, la méthode de la sécante, la recherche linéaire par retour-arrière, la méthode de Nelder-Mead ou la recherche de la divine proportion.

**8.** Récepteur (120) selon l'une quelconque des revendications 1 à 7, dans lequel le processeur (520) est conçu pour estimer la valeur maximale de l'approximation de Karhunen-Loeve de la fonction de probabilité logarithmique $\lambda(\varepsilon)$ par les étapes suivantes consistant à :

sélectionner $P$ valeurs $\varepsilon$ de sorte que $\varepsilon \in \{\varepsilon_1, \varepsilon_2, ..., \varepsilon_P\}$ soit dans l'intervalle [-0,5 ; 0,5] ;
calculer $P$ valeurs de l'approximation de Karhunen-Loeve de $\lambda(\varepsilon)$ pour $\varepsilon \in \{\varepsilon_1, \varepsilon_2, ..., \varepsilon_P\}$ ;
déterminer la valeur la plus grande de l'approximation de Karhunen-Loeve de $\lambda(\varepsilon)$, notée $\lambda_{max}$, comme étant $\lambda_{max} = \max \lambda(\varepsilon_m)$, $1 \leq m \leq P$, et une valeur correspondante de $\varepsilon$ notée $\varepsilon_{max}$ ; et
utiliser la valeur la plus grande $\lambda_{max}$ et la valeur correspondante $\varepsilon_{max}$ déterminées comme étant un point de départ dans un algorithme de recherche linéaire pour trouver le maximum de l'approximation de Karhunen-Loeve de $\lambda(\varepsilon)$.

**9.** Récepteur (120) selon la revendication 8, dans lequel le processeur (520) est conçu pour, une fois déterminées la valeur la plus grande $\lambda_{max}$ et la valeur correspondante $\varepsilon_{max}$, déterminer que la valeur maximale de l'approximation de Karhunen-Loeve de $\lambda(\varepsilon)$ est dans un intervalle :

$$\varepsilon \in \frac{2\varepsilon_{max}-2-P}{2P}, \frac{2\varepsilon_{max}-P}{2P}.$$

**10.** Récepteur (120) selon la revendication 9, dans lequel le processeur (520) est conçu pour trouver la valeur maximale de l'approximation de Karhunen-Loeve de $\lambda(\varepsilon)$ dans l'intervalle déterminé avec $M$ itérations, au moyen d'un algorithme d'optimisation compris dans le groupe constitué de : la méthode de Newton-Raphson, la méthode de la sécante, la recherche linéaire par retour-arrière, la méthode de Nelder-Mead ou la recherche de la divine proportion.

**11.** Récepteur (120) selon l'une quelconque des revendications 1 à 10, le récepteur (120) étant représenté par un équipement d'utilisateur (UE), et l'émetteur (110) étant représenté par un noeud de réseau radio.

**12.** Récepteur (120) selon l'une quelconque des revendications 1 à 10, le récepteur (120) étant représenté par un noeud de réseau radio, et l'émetteur (110) étant représenté par un UE.

**13.** Procédé (400) dans un récepteur (120), destiné à estimer une valeur de décalage de fréquence normalisé $\varepsilon$ entre un émetteur (110) et le récepteur (120) dans un système de communication sans fil (100), sur la base d'un multiplexage par répartition orthogonale de la fréquence (OFDM), le procédé (400) consistant à :

recevoir (401) un premier signal pilote $Y_{r1}$ et un second signal pilote $Y_{r2}$ en provenance de l'émetteur (110) ;
déterminer (402) un modèle de corrélation à appliquer selon qu'une corrélation parmi des canaux de sous-porteuse impliqués au niveau du premier signal pilote $Y_{r1}$ et du second signal pilote $Y_{r2}$ est connue ou non, consistant à : déterminer le modèle de corrélation sur la base d'un modèle quelconque parmi des modèles de corrélation piéton étendu A (EPA), véhiculaire étendu A (EVA) et urbain type étendu (ETU) quand la corrélation parmi des canaux de sous-porteuse impliqués au niveau du premier signal pilote $Y_{r1}$ et du second signal pilote $Y_{r2}$ est connue ;
calculer (403) trois valeurs complexes $\mu_{-1}$, $\mu_0$ et $\mu_1$, par une extension complexe d'une fonction de probabilité logarithmique $\lambda(\varepsilon)$, sur la base du modèle de corrélation déterminé ; et
estimer (404) la valeur de décalage de fréquence $\varepsilon$ en trouvant une valeur maximale de l'approximation de Karhunen-Loeve de la fonction de probabilité logarithmique $\lambda(\varepsilon)$, sur la base des trois valeurs complexes $\mu_{-1}$, $\mu_0$ et $\mu_1$ calculées (403).

**14.** Procédé (400) selon la revendication 13, consistant en outre à :
déterminer le modèle de corrélation en calculant $\boldsymbol{Q}\Sigma_0\boldsymbol{Q^H}$, où Q est la matrice IFFT et :

$$\boldsymbol{\Sigma}_0 = \begin{bmatrix} \frac{N_{FFT}}{N_{CP}} & & & & \\ & \ddots & & & \\ & & \frac{N_{FFT}}{N_{CP}} & & \\ & & & 0 & \\ & & & & \ddots \\ & & & & & 0 \end{bmatrix}$$

où $\Sigma_0$ est une matrice diagonale comprenant les valeurs propres de la covariance parmi les sous-porteuses au niveau d'un quelconque symbole OFDM donné, $N_{cp}$ est la longueur d'un préfixe cyclique (CP) et $N_{FFT}$ est le nombre de sous-porteuses des signaux pilotes reçus $\mathbf{y}_{r1}$, $\mathbf{y}_{r2}$, quand la corrélation parmi des canaux de sous-porteuse impliqués au niveau du premier signal pilote $\mathbf{y}_{r1}$ et du second signal pilote $\mathbf{y}_{r2}$ est connue.

**15.** Programme informatique comprenant un code de programme permettant de réaliser un procédé (400) selon l'une quelconque des revendications 13 et 14 quand le programme informatique est réalisé sur un processeur (520).

100

$y_{r1}$

$y_{r2}$

110
Transmitter

120 Receiver

Fig. 1A

100

$y_{r1}$

$y_{r2}$

110
Transmitter

120 Receiver

Fig. 1B

201
..., $y_0$, $y_1$, ..., $y_t$, ...

202
Extract OFDM
symbols 0 and t.

$y_0$, $y_t$

204
Compute 3
complex
values:

$\mu_{-1} = \lambda(-1/t\Delta)$

$\mu_0 = \lambda(0)$

$\mu_1 = \lambda(1/t\Delta)$

$\mu_{-1}$, $\mu_0$, $\mu_1$

205
Estimate
CFO $\varepsilon$.

203
Estimate correlation model:
EPA, EVA, ETU or some
other type; alternatively
compute $\Sigma_0$.

$\Sigma_0$, $\alpha$, $N_0$

$\varepsilon_{FFO}$

Fig. 2

Fig. 3

400

START

Receive pilot signals from the transmitter.

401

Determine a correlation model to be applied.

402

Compute three complex values $\mu_{-1}$, $\mu_0$, and $\mu_1$, by a log-likelihood function $\lambda(\varepsilon)$, based on determined correlation model.

403

Estimate the frequency offset $\varepsilon$ by finding a maximum value of the log-likelihood function $\lambda(\varepsilon)$.

404

END

Fig. 4

**110 Transmitter**

540 Antenna

510 Receiving circuit

525 Memory

530 Transm. circuit

520 Processor

120 Receiver

Fig. 5

**EP 3 219 064 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2887599 A1